# EUROPEAN PATENT APPLICATION

(11) **EP 4 617 117 A1**
(43) Date of publication of application: **17.09.2025**
(21) Application number: 25163837.5
(22) Date of filing: 14.03.2025
(51) Int. Cl.: B60N 2/56, B60N 2/58, B60N 2/70, B60N 2/90

(54) **SEAT ASSEMBLIES AND SUBASSEMBLIES**

(30) Priority: 15.03.2024 US 202463565651 P; 24.01.2025 US 202519036479
(71) Applicant: Lear Corporation, Southfield, MI 48033 (US)
(72) Inventor: Cabbie, Brian, Berkley, MI 48072 (US); Cloutier, Timothy M., Clawson, MI 48017 (US); Abdella, David, Royal Oak, MI 48073 (US); Blair, Samuel, Rochester, MI 48306 (US); Baisch, Ashley, Washington Twp., MI 48098 (US); Kasperczyk, Grzegorz, 01-164 Warszawa (PL); Fletcher, Ian, Milford, MI 48380 (US); Jadhav, Akshay, 411 026 Pune (IN); Bheemshetty, Srikanth, 411 026 Pune (IN); Chaudhari, Jayant, 411 026 Pune (IN); Ziolkowski, Steven, Farminton Hills, MI 48335 (US)
(74) Representative: Grünecker Patent- und Rechtsanwälte PartG mbB

(57) **Abstract**

A seat system includes a plurality of seat components, a seat cushioning material, and a trim cover. The seat components include at least a fan, inflatable bladders, a heat mat, a foam layer, and an air distribution layer. The trim cover is disposed on the seat cushioning material, the seat components are disposed between the seat cushioning material and the trim cover and are secured together with at least one fastener.

## Description

### TECHNICAL FIELD

Various embodiments relate to seat assemblies and subassemblies pertaining to trim covers, ventilation, modularity, packaging, fluid line sheets, attachable bladders, and methods for manufacturing assemblies, fluid line sheets and attachable bladders.

### BRIEF DESCRIPTION OF THE DRAWINGS

FIGURE 1 is a partial section front perspective view of a seat assembly according to some embodiments;
FIGURE 2 is a front elevation view of a modular packaging subassembly of the seat assembly of Figure 1, according to some embodiments;
FIGURE 3 is a front elevation view of a modular packaging subassembly of the seat assembly of Figure 1, according to some embodiments;
FIGURE 4 is a front elevation view of a modular packaging subassembly of the seat assembly of Figure 1, according to some embodiments;
FIGURE 5 is a rear elevation view of the modular packaging subassembly of Figure 4;
FIGURE 6 is a side elevation view of the modular packaging subassembly of Figure 4;
FIGURE 7 is a bottom view of a modular packaging subassembly of the seat assembly of Figure 1, according to some embodiments;
FIGURE 8 is a front perspective view of a seat assembly according to some embodiments;
FIGURE 9 is a partial section view of a subassembly of the seat assembly of Figure 8;
FIGURE 10 is another partial section view of the subassembly of Figure 9 according to some embodiments;
FIGURE 11 is another partial section view of a portion of the subassembly of Figure 9 according to some embodiments;
FIGURE 12 is another partial section view of a portion of the subassembly of Figure 9 according to some embodiments;
FIGURE 13 illustrates a method according to some embodiments;
FIGURE 14 illustrates a schematic perspective view of a seat assembly according to some embodiments to with a fluid assembly to provide fluid massage;
FIGURE 15 illustrates a side elevation view of a fluid fitting of the fluid assembly, according to some embodiments;
FIGURE 16 illustrates a side view of a fluid bladder according to some embodiments;
FIGURE 17 illustrates a side exploded view of the fluid assembly, according to some embodiments;
FIGURE 18 illustrates a side view of a fluid bladder of the fluid assembly, according to some embodiments;
FIGURE 19 illustrates an exploded perspective view of a portion of the fluid assembly, according to some embodiments;
FIGURE 20 illustrates a side view of a fluid bladder according to some embodiments;
FIGURE 21 illustrates an exploded side view of the fluid assembly according to some embodiments;
FIGURE 22 illustrates an exploded side view of the fluid assembly according to some embodiments; and
FIGURE 23 illustrates an exploded side view of the fluid assembly according to some embodiments.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It is to be understood that the disclosed embodiments are merely exemplary and that various and alternative forms are possible. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ embodiments according to the disclosure.

"One or more" includes a function being performed by one element, a function being performed by more than one element, *e.g.*, in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first layer could be termed a second layer, and, similarly, a second layer could be termed a first layer, without departing from the scope of the various described embodiments. The first layer and the second layer are both layers, but they are not the same layer.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Moreover, all numerical quantities in this disclosure are to be understood to represent two example, one of which is the numerical quantity itself and the other of which is the numerical quantity modified by the word "about" in describing the broader scope of this disclosure. Also, unless expressly stated to the contrary: percent, "parts of," and ratio values are by weight. The term "polymer" includes "oligomer," "copolymer," "terpolymer," and the like. Molecular weights provided for any polymers refers to number average molecular weight. Description of constituents in chemical terms refers to the constituents at the time of addition to any combination specified in the description and does not necessarily preclude chemical interactions among the constituents of a mixture once mixed. The first definition of an acronym or other abbreviation applies to all subsequent uses herein of the same abbreviation and applies *mutatis mutandis* to normal grammatical variations of the initially defined abbreviation. Unless expressly stated to the contrary, measurement of a property is determined by the same technique as previously or later referenced for the same property.

This disclosure is not limited to the specific embodiments and methods described below, as specific components and/or conditions may vary. Furthermore, the terminology used herein is used only for the purpose of describing particular embodiments and is not intended to be limiting in any way.

The term "substantially" or "generally" may be used herein to describe disclosed or claimed embodiments. The term "substantially" may modify a value or relative characteristic disclosed or claimed in the present disclosure. In such instances, "substantially" and "generally" may signify that the value or relative characteristic is within manufacturing tolerances thereof, or is within ± 0%, 0.1%, 0.5%, 1%, 2%, 3%, 4%, 5% or 10% of the value or relative characteristic.

It should also be appreciated that integer ranges explicitly include all intervening integers. For example, the integer range 1-10 explicitly includes 1, 2, 3, 4, 5, 6, 7, 8, 9, and 10. Similarly, the range 1 to 100 includes 1, 2, 3, 4 . . . 97, 98, 99, 100. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits.

The terminology controller may be provided as one or more controllers or control modules for the various components and systems. The controller and control system may include any number of controllers, and may be integrated into a single controller, or have various modules. Some or all of the controllers may be connected by a controller area network (CAN) or other system. It is recognized that any controller, circuit, or other electrical device disclosed herein may include any number of microprocessors, integrated circuits, memory devices (e.g., FLASH, random access memory (RAM), read only memory (ROM), electrically programmable read only memory (EPROM), electrically erasable programmable read only memory (EEPROM), or other suitable variants thereof) and software which co-act with one another to perform operation(s) disclosed herein. In addition, any one or more of the electrical devices as disclosed herein may be configured to execute a computer-program that is embodied in a non-transitory computer readable medium that is programmed to perform any number of the functions as disclosed herein.

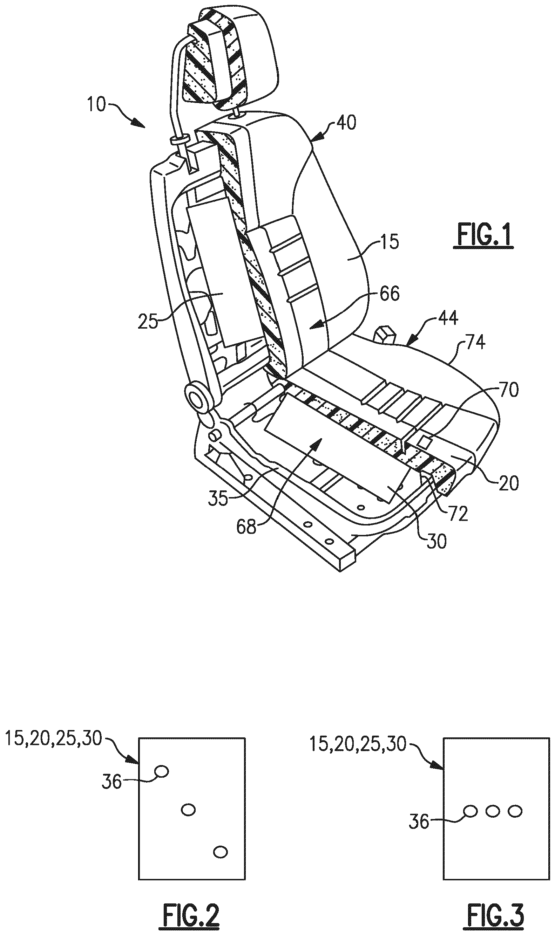

Referring to Figure 1, a seat assembly (e.g., system) 10 is disclosed. The seat assembly 10 may be employed in a land vehicle, a watercraft, an aircraft, or the like. The seat assembly 10 may be a seat assembly in a passenger vehicle, a straddle-type vehicle, or the like. The seat assembly 10 may include one or more subassemblies 15-35. For example, the seat assembly 10 includes trim subassembly (cover) 15 disposed over a cushion subassembly 20 which is supported by a frame subassembly 35. In some embodiments, the trim subassembly 15 includes ventilation. In some embodiments, the seat subassembly 10 also includes a fluid subassembly 25, 30. In some embodiments, the seat assembly 10 includes a temperature control subassembly 25, 30. In various embodiments, the fluid subassembly 25, 30 is a ventilation assembly and/or a massaging assembly. In some embodiments, the fluid subassembly 25, 30 cooperates with ventilation in the trim subassembly 15, and in some embodiments, the fluid subassembly 25, 30 includes trim subassembly 15 ventilation. In some embodiments, the fluid subassembly 25, 30 includes the temperature control subassembly 25, 30. The temperature control subassembly 25, 30, for example, includes a heat transfer subassembly. In some embodiments, a valve subassembly is included to control a flow of fluid. In some embodiments a retainer or fastener may attach various components to a cushion.

According to some embodiments, the assemblies 10, 15, 20, 25, 30, 35 and subassemblies 10, 15, 20, 25, 30, 35 may each be provided separately. According to some embodiments, the assemblies 10, 15, 20, 25, 30, 35 and subassemblies 10, 15, 20, 25, 30, 35 may be provided as preassembled modules 10, 15, 20, 25, 30, 35. The assemblies 10, 15, 20, 25, 30 or subassemblies 10, 15, 20, 25, 30 may be preassembled to the frame subassembly 35. The assemblies 10, 15, 25, 30, 35 or subassemblies 10, 15, 25, 30, 35 may also be preassembled to the cushion subassembly 20. The assemblies 10, 20, 25, 30, 35 or subassemblies 10, 20, 25, 30, 35 may also be preassembled to the trim assembly 15. The assemblies 10, 15, 25, 30, 35 or subassemblies 10, 15, 25, 30, 35 may also be integrated into a seat cushioning material subassembly 20, e.g., integrated into foam or an extruded thermoplastic mesh. The cushion subassembly 20 may be a pad, and may include a fluid permeable spacer fabric. In some embodiments, the cushion subassembly 20 may be formed from an additive manufacturing process, such as the processes disclosed in Migneco et al. U.S Patent No. 11,440,791 B2, which issued to Lear Corporation on September 13, 2022. Various options are available to preassemble the subassemblies 10, 15, 20, 25, 30, 35 or assemblies 10, 15, 20, 25, 30, 35 as modules, or to the frame subassembly 35, or to the seat cushioning material subassembly 20.

Figures 2 and 3 illustrate a plurality of stacked layers of the assemblies 15, 20, 25, 30 or subassemblies 15, 20, 25, 30. The assemblies 15, 20, 25, 30 or subassemblies 15, 20, 25, 30 are illustrated preassembled by a plurality of fasteners 36. The fasteners 36 are mechanical devices holding two or more things together, such as to assemble or preassemble any combination of the assemblies 15, 20, 25, 30 or subassemblies 15, 20, 25, 30. The fasteners 36 may extend through a sequential pair of layers or any quantity of layers of the assemblies 15, 20, 25, 30 or subassemblies 15, 20, 25, 30. The fasteners 36 may also be aligned in various fastener arrays as depicted in the examples of Figures 2 and 3. The assemblies 15, 20, 25, 30 or subassemblies 15, 20, 25, 30 may be preassembled as a module that is then assembled to the frame subassembly 35. Any combination of the assemblies 15, 20, 25, 30 or subassemblies 15, 20, 25, 30 may be preassembled to assist in various manufacturing strategies, such as just-in-time manufacturing. The assemblies 20, 25, 30 or subassemblies 20, 25, 30 may be preassembled, and then subsequently assembled to the trim cover subassembly 15.

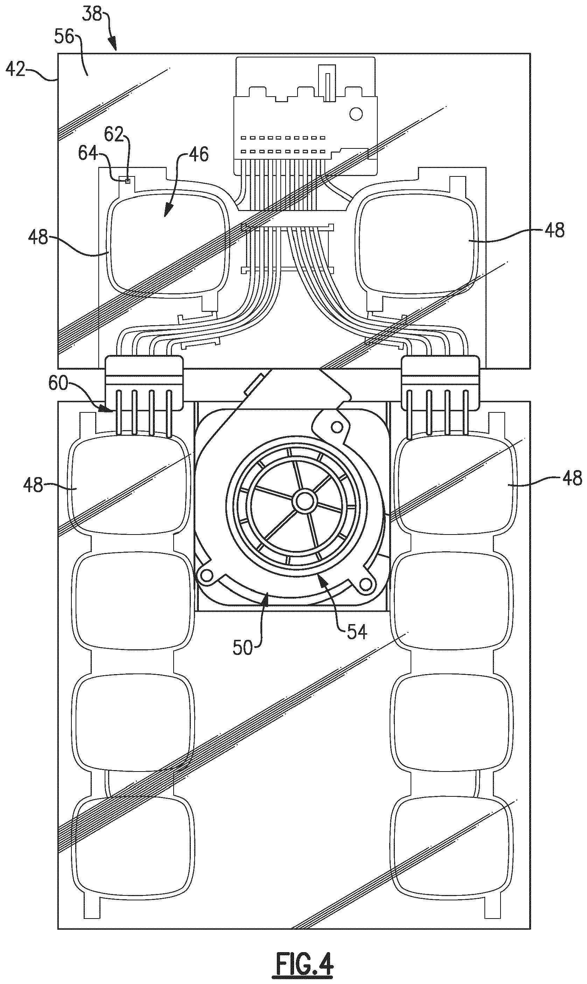

Figures 4-6 illustrate a subassembly 38 according to some embodiments. In the depicted embodiment, the subassembly 38 is a seat module sized to be installed into a seatback 40 (Figure 1) of the seat assembly 10 (also Figure 1). The subassembly 38 includes a substrate 42 that is sized to be installed into the seatback 40. In some embodiments, the subassembly 38 and the substrate 42 are sized to be installed into a seat bottom 44 (Figure 1) of the seat assembly 10. The substrate 42 is formed from any suitable material. For example, the substrate 42 is formed from a fluid impermeable layer of thermoplastic polyurethane in some embodiments.

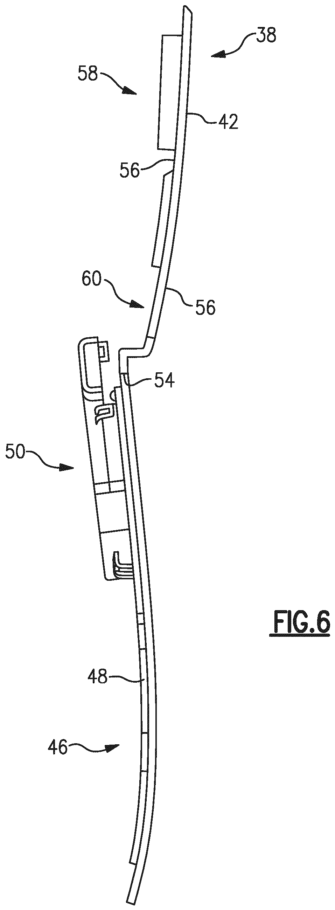

The subassembly 38 includes a massage subassembly 46 attached to the substrate 42 according to some embodiments. The massage subassembly 38 is provided with at least one, and as depicted, a plurality of inflatable massage bladders 48 (Figures 4 and 6). The cushion subassembly 20 may include a plurality of recesses formed into the cushion to each receive one of the bladders 48. A recess refers to a bulk space, as opposed to a void cell in the foam. The massage subassembly 46 includes air bladders 48 in various regions of the seat assembly 10, such as in a lumbar region 66 (Figure 1) of the seatback 40. The subassembly 38 and the massage subassembly 46 are sized to be received within the trim cover subassembly 15 according to some embodiments. Under some other embodiments, the massage subassembly 46 is disposed external of the trim cover subassembly 15 and the seat module subassembly 38.

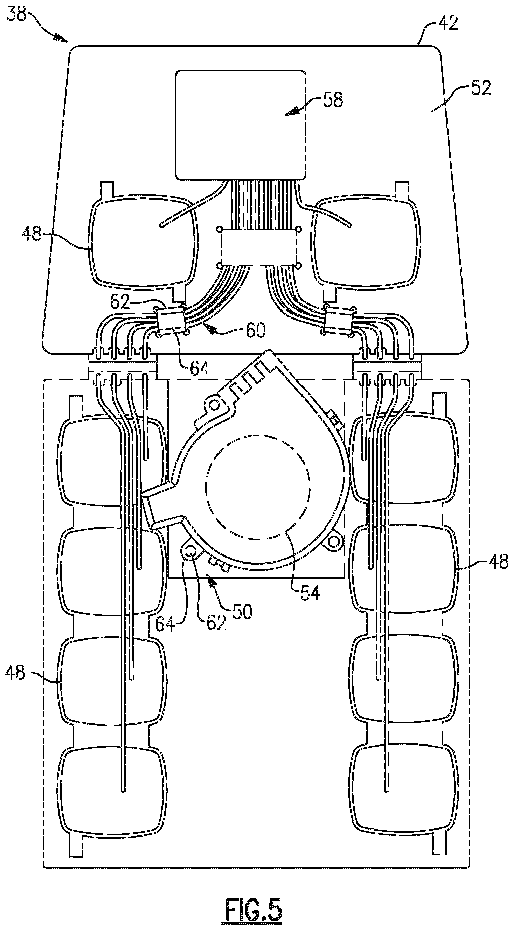

The subassembly 38 also includes a pair of fluid actuator subassemblies 50, which according to some embodiments, are fan subassemblies 50. The fan subassemblies 50 are attached to a rear side 52 (Figure 5) of the substrate 42 and aligned with apertures 54 through the substrate 42 to force air through the substrate 42 and from a front side 56 of the substrate 42.

The subassembly 38 may also include another fluid actuator subassembly 58 as illustrated in Figures 5 and 6 according to some embodiments. The fluid actuator subassembly 58 may include a pump, and a valve manifold 58 to convey fluid, such as pressurized air, to the massage subassembly 38. The fluid actuator subassembly 58 is also attached to the substrate 42. The fluid actuator subassembly 58 may include a controller, which controls the pump and valve manifold of the fluid actuator subassembly 58. The controller may be a multifunction controller that also controls other functions in the vehicle. Alternatively, the controller may be provided separate from the fluid actuator subassembly 58.

The subassembly 38 may also include a ventilation subassembly 60 attached to the substrate 42 according to some embodiments. The ventilation subassembly 60 includes a plurality of tubing in fluid communication with the massage subassembly 46 and the valve/pump subassembly 58 to convey pressurized fluid from the valve/pump subassembly 58 to the massage subassembly 46. Alternatively, the ventilation subassembly 60 may be formed integrally into the substrate 42 as is known in the art.

Each of the subassemblies 46, 50, 58, 60 of the seat module subassembly 38 are preassembled to the substrate 42 prior to installation in the seat assembly 10. Each of the subassemblies 46, 50, 58, 60 are fastened to the substrate 42 via fasteners 62. The fasteners 62 may include a key and tab that interlock (e.g., a "t-tab"), a weld, a rivet, a tag pin, a barbed fastener, a ribbed shank rivet, a staple, a clip, an adhesive, a tie down, a snap, a toggle closure, or the like. The rivet 62 may be a rivet as disclosed in Persson et al. US Patent No. 10,065,543 B2, which issued to Kongsberg Automotive AB on September 4, 2018. The fastener 62 may permit longitudinal movement of the respective subassembly 46, 50, 58, 60 or the substrate 42 along a length of the fastener 62. One or more of the substrate 42, the massage subassembly 46, the fluid actuator subassemblies 50, 58, and the ventilation subassembly 60 include a plurality of alignment apertures 64 for receipt of the fastener 62. The plurality of alignment apertures 64 may include a notch formed into an outer periphery thereof for alignment of layers. The fasteners 62 may also be employed to attach the subassembly 38 to the seat frame subassembly 35. The fasteners 62 may also include an elastic strap to attach the subassembly 38 to the seat frame subassembly 35. The fasteners 62 may also attach the substrate 42 to the trim cover subassembly 15. The elastic strap may also be attached to an internal surface of the trim cover subassembly 15. The cushion subassembly 20 may include apertures to receive the elastic straps of the fastener 62 through the cushion subassembly 20.

With reference again to Figure 1, a heat transfer subassembly 68 may be disposed within the trim cover subassembly 15. The heat transfer subassembly 68 may be a heater mat for heating the seat assembly 10. The heat transfer subassembly 68 may also be preassembled with other subassemblies 38, 46, 50, 58, 60.

A sensor 70 is provided on the cushion subassembly 20 within the trim cover subassembly 15 in some embodiments. One or more sensors 70 may be employed to measure data from an occupant. Wiring 72 is also enclosed within the trim cover subassembly 15 for communication and operation of the various subassemblies 38, 46, 50, 58, 60, 68.

With continued reference to Figure 1, the trim cover subassembly 15 is attached to the underlying substrate 42 to provide a chamber within the cover subassembly 15 to enclose, or at least partially enclose, the cushion subassembly 20, the seat module subassembly 38 and the attached subassemblies 46, 50, 58, 60 between the cover subassembly 15 and the substrate 42. The cover subassembly 15 may also be formed from a fluid impermeable layer, such as thermoplastic polyurethane, according to some embodiments. The cover subassembly 15 may be attached to the substrate 42 along a periphery of the substrate 42. The cover subassembly 15 may joined to the substrate 42 for a fluid tight chamber within the cover subassembly 15. The cover subassembly 15 may be welded, sewn, or otherwise attached to the substrate 42. The trim cover subassembly 15 includes a sidewall 74 connected to the substrate 42. According to some embodiments the sidewall 74 is collapsible. According to other embodiments, the sidewall 74 includes a plurality of stackable portions as a corrugated bellows joint.

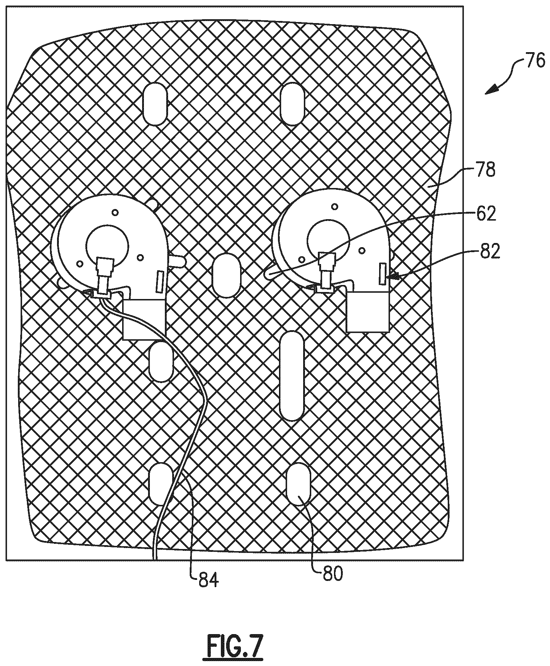

Figure 7 illustrates a seat module subassembly 76 according to some embodiments. The seat module subassembly 76 is sized to be received within the seat bottom 44. The subassembly 76 includes a substrate 78 formed from one or more layers. A plurality of apertures 80 are formed through the substrate 78 (i.e., an air distribution layer) to cooperate with other subassemblies, such as ventilation or heat transfer subassemblies. A plurality of fan subassemblies 82 are fastened to the substrate 78 with fasteners 62. Wiring 84 is also provided to power and control the fan subassemblies 82. The seat module subassembly 76 and associated subassemblies 82 and components are housed (i.e. nested) within a chamber cavity of the trim cover subassembly 15.

An assembly (e.g., vehicle seat assembly 10, trim cover subassembly 15, cushion subassembly 20, fluid actuator subassembly 25, 30, seat module subassembly 38, seat module subassembly 76) is described which may be a seat assembly or a subassembly thereof. The assembly (e.g., vehicle seat assembly 10, trim cover subassembly 15, cushion subassembly 20, fluid actuator subassembly 25, 30, seat module subassembly 38, seat module subassembly 76) comprises a substrate (e.g., substrate 42) sized to be installed in a seat bottom (e.g., seat bottom 44) or a seat back (e.g., seatback 40).

The substrate may be formed from a fluid impermeable layer thermoplastic polyurethane, which may be formed integrally with a cover. A massage subassembly (e.g., massage subassembly 46) is attached to the substrate (e.g., substrate 42). The massage subassembly may include one or more massage bladders, which may be at least partially enclosed by a cover, disposed external of the cover and the substrate, or disposed between the cover and the substrate.

A fluid actuator subassembly (e.g., fluid actuator subassembly 50, 58) is attached to the substrate (e.g., substrate 42). The fluid actuator subassembly may be a fan assembly, a valve subassembly, a pump in fluid communication with the valve subassembly, at least one inflatable bladder assembly supported upon the first fluid impermeable layer to impart a pressure upon an occupant. The vehicle seat assembly may be provided with a seat bottom adapted to be mounted to a vehicle floor. The vehicle seat assembly may be provided in any row of a vehicle. The vehicle seat assembly may include a seat back extending upright from the seat bottom. The vehicle seat assembly may also include a head restraint extending above the seat back. The vehicle seat assembly may be employed in any type of vehicle, including land vehicles, watercrafts, aircrafts, or the like. The vehicle seat assembly may be any seat assembly such as an office chair, furniture, or the like. The vehicle seat assembly may be provided with a trim cover over the seat bottom, seat back, and head restraint to conceal a frame, cushioning, and functional components.

The seat bottom may be provided with a seat cushioning material. The seat cushioning material may be composed of strands of thermoplastic resin or a foam. The vehicle seat assembly may also be provided with a controller and pump. The controller and pump may be provided in a module under the seat cushioning material, and may be a multifunction controller that also controls other functions in the vehicle.

In at least one embodiment, the non-foam material is formed from strands of thermoplastic resin, for example, a linear low-density polyethylene (LLPDE) material, although other polymers and materials effective to provide the desired properties and functionality are contemplated, such as, but not limited to polyamide-based, polyester-based, polyimide-based, polyolefin-based (e.g., polypropylene-based, polyethylene-based, etc.), polystyrene-based, or combinations thereof. At least one of the strands is looped and bonded to at least one other strand, which forms a three-dimensional structure. The use of thermoplastic has several advantages over traditional polyurethane foam, such as reduced toxicity, reduced weight, reduced production costs and increased recyclability. As would be understood, the material properties of the resin may be adjusted to change the material hardness and, therefore, the resulting firmness of the resulting cushion. Similarly, the density and orientation of the strands may be adjusted to change the firmness of the resulting cushion, the porosity and, therefore, resulting airflow through the material, etc.

In at least one embodiment, the strands of thermoplastic material are extruded. A container holding beads, granules, flakes, pellets, or powder of the resin dispenses the material, which is then melted and extruded through a die head. The dimensions and orientation of the holes through which the melted resin is extruded may be changed to achieve different properties of the resulting cushion. The extruded strands are then deposited in a water bath, which serves to loop and bond at least one of the strands to another of the strands to form a mesh, as well as begin the cooling process to return the strands from a molten to a hardened state. The distance of the die head from the water bath may be adjusted to affect the diameter of the resin strands, e.g., due to the thinning that occurs when the filaments extend over an increased distance and the material is in a molten, non-hardened state. The water bath may be provided with various rollers and conveyors to move the filaments through and out of the water bath, and the filament structure may be cut to a desired sized and shape to form a cushion blank, e.g. using a cutting wheel, a water jet, or another technique.

The result of the process is, in one embodiment, a mesh structure of relatively uniform dimensions, e.g., a rectangular block or prism. In other embodiments, the strands can be manipulated during any step in the process to produce a mesh structure with features, such as contours, notches, trenches, skins, etc. The manipulations, for example, include changing the speed of the extrusion, changing the speed that the strands are extracted from the water bath, introducing streams of air or water blown onto the strands before they reach the water bath, perturbations of the water bath, adding layers of permeable or impermeable material, etc.

In some embodiments, the mesh structure may be further processed to introduce new shapes and features to the mesh. For example, in one embodiment, the mesh structure is cut into blanks that are placed in molds. To more permanently configure the shape of the blank, the cushion blank is heated to a temperature where the polymeric material from which it is made begins to soften. The control of temperatures and other manufacturing processes may result in some limited, unintentional localized melting of the polymeric material, but if this occurs, it would be negligible, and most of the cushion blank would remain in a non-liquid state. Therefore, the cushion blank begins the molding process in a solid state, and mostly or completely remains in a solid-state throughout the process. In one embodiment this is achieved by passing a first fluid having a first predetermined temperature through the mold, and through the cushion blank itself. This introduces a first fluid flow through the cushion blank to bring it to a desired temperature.

The fluid in the fluid flow may be a gas, a liquid, or some combination of gas and liquid. For example, the fluid may be air, steam, super-heated steam, water, etc. The first predetermined temperature will depend on the specific material from which the cushion blank 12 is manufactured. For example, for a stranded-mesh material made from linear low-density polyethylene, such as described above, the first predetermined temperature may be in the range of 85-100 °C. Other types of polymeric materials may have different temperature ranges in which they become compliant-e.g., for a high-density polyethylene or a polypropylene, the first predetermined temperature may be 100-130 °C.

Because the cushion blank is made from a stranded-mesh material, the heated air flows generally uniformly throughout the entire thickness of the blank. This helps to ensure uniform heating so that all the material in the cushion blank becomes compliant.

A second fluid may, subsequently, be passed through the mold to effect cooling of the cushion and harden the cushion to the mold shape. The second fluid air, steam, super-heated steam, water, etc.

The seat subassembly may be provided with a second fluid impermeable layer sized to be placed over the seat cushioning material. The first fluid impermeable layer may be composed of a cushioning material. The second fluid impermeable layer may be formed from an impermeable polymeric material, such as thermoplastic polyurethane (TPU) film, polyvinyl chloride (PVC) film, polyethylene, or the like.

The first fluid impermeable layer may be provided with a plurality of vents formed therethrough. Any quantity of vents may be utilized. The vents may direct airflow through the seat subassembly. The first fluid impermeable layer and vents may be optional if the trim cover has a plurality of holes formed therethrough. The first fluid impermeable layer may be insulative. The first fluid impermeable layer and the second fluid impermeable layer may be bonded together with a seam that is sewn, adhered, welded, or the like, around peripheral edges of the layers. The second fluid impermeable layer may be in cooperation with the first fluid impermeable layer to provide a fluid chamber therebetween.

The inflatable bladder assembly may be supported on the first fluid impermeable layer and may be disposed within the fluid chamber. The inflatable bladder assembly may be disposed outside of the fluid chamber, such as between the second fluid impermeable layer and the seat cushioning material.

The controller may be in electrical communication with the pump, which in turn, may be in fluid communication with the inflatable bladder assembly to inflate the assembly. The controller may be programmed to receive input indicative of a manual adjustment and adjust the inflatable bladder assembly to impart a pressure upon an occupant. The controller may also be programmed to receive input indicative of a massage program to operate the inflatable bladder assembly to impart a pressurized massage effect upon the occupant.

The seat subassembly may be further provided with a fluid permeable layer. The fluid permeable layer may be formed from a resilient and porous material, such as porous foam or an extruded thermoplastic resin mesh. The fluid permeable layer may be sized to be received within the fluid chamber, disposed on the inflatable bladder assembly. The fluid permeable layer and the inflatable bladder assembly may be disposed between the first fluid impermeable layer and the second fluid impermeable layer. Any quantity of air bladder assemblies may be employed.

The fluid permeable layer may ensure that the first fluid impermeable layer and the second fluid impermeable layer are not compressed together by the weight of an occupant. Without the permeable layer, the impermeable layers could be compressed when weight from an occupant is applied which may cut off airflow when using a fan. When the seat subassembly utilizes a compressor as opposed to the fan, the permeable layer may be omitted.

The seat subassembly may also be provided with a heat transfer layer disposed along the first fluid impermeable layer, and spaced apart from the second fluid impermeable layer. The heat transfer layer may be disposed along the trim layer or alternatively disposed between the second fluid impermeable layer and the fan. The heat transfer layer may be disposed between the first fluid impermeable layer and the first fluid permeable layer. The heat transfer layer may be provided with an electrically conductive heater mat. The seat subassembly may be provided as a preassembled module that is subsequently assembled to the seat cushioning material, and/or the seat trim cover.

The seat subassembly may be further provided with the external trim layer disposed over the first fluid impermeable layer and the second fluid impermeable layer. The trim layer may be perforated to permit the fluid to pass through the external trim layer. The trim layer may be glued to the first fluid impermeable layer.

The seat subassembly may be provided with a fluid actuator, such as a fan. The fluid actuator may be welded directly to the second fluid impermeable layer to seal a connection around the fan. The fan may be connected to the second fluid impermeable layer with a retention ring. The fan may be installed between the trim cover and the seat cushioning material. The seat cushioning material may include a receptacle sized to receive the fan. Installation of the fan above the seat cushioning material may allow the fan to be displaced within the seat subassembly.

The fluid impermeable layers, the permeable layer, the heat transfer layer, the air bladder assemblies, and the fluid actuator may all be preassembled within the seat subassembly so that the seat subassembly can be installed as a whole onto a seat frame. The seat subassembly may be operable with an air permeable nonfoam seat cushioning material formed from the stranded mesh described above. The second fluid impermeable layer may provide a barrier between the fluid chamber and the seat cushioning material. When utilized with a foam or stranded cushion, the second fluid impermeable layer may be omitted if the cushion is air impermeable. In this case, the fluid actuator may be welded directly to the first fluid impermeable layer to convey a fluid through the vent of the fluid impermeable layer. The fluid actuator may be separate from the trim cover. The first fluid impermeable layer, and the second fluid impermeable layer may be provided with stitching along the perimeter. The stitching may seal the layers so that air does not escape the fluid chamber. The layers may be attached with an adhesive or welded together as opposed to utilizing the stitching.

The second fluid impermeable layer may be provided with a first portion and a second portion. The first portion may be further provided with a first flap. The first flap may be perforated to allow air flow between zones or seams within the subassembly. The first flap may be segmented to allow air flow between zones and/or within the fluid chamber. The second portion may be further provided with a second flap extending in a direction opposite of the first flap. The flaps may be employed for attaching the subassembly to other seating components or subassemblies. The second flap may be connected to the seat cushioning material. The first portion and the second portion may be sewn, welded, adhered, or otherwise fastened together. The first portion and the second portion may be ultrasonic welded or high frequency friction welded together.

The second fluid impermeable layer may be a continuous sheet. The second fluid impermeable layer may be provided with a first flap and a second flap. The first flap may be perforated to allow air to pass therethrough within the fluid chamber. The second flap may extend in a direction opposite of the first flap and may be attached to the seat cushioning material. The first and second flaps may be sewn, welded, adhered, or otherwise fastened to the second fluid impermeable layer. The first and second flaps may be ultrasonic welded or high frequency friction welded to the second fluid impermeable layer.

The substrate may be at least partially enclosed by a cover, with the fluid actuator subassembly disposed between the cover and the substrate. A ventilation subassembly (e.g., ventilation subassembly 60) is in fluid communication with the massage subassembly (e.g., massage subassembly 46) and the fluid actuator subassembly (e.g., fluid actuator subassembly 50, 58). The ventilation subassembly may be formed into the substrate (i.e., embedded to set firmly into, such as by overmolding), disposed within a chamber of a cover attached to the substrate, and/or at least partially enclosed by a cover.

The massage subassembly (e.g., massage subassembly 46), the fluid actuator subassembly (e.g., fluid actuator subassembly 50, 58), and the ventilation subassembly (e.g., ventilation subassembly 60) are preassembled to the substrate (e.g., substrate 42) prior to installation in the seat bottom (e.g., seat bottom 44) or the seat back (e.g., seatback 40). The massage subassembly, the fluid actuator subassembly, and the ventilation subassembly are preassembled may be fastened together by a weld, fastener, rivet, tag pin, barbed fastener, ribbed shank rivet, and the fastener may attach the massage subassembly and/or the fluid actuator subassembly to the substrate, or to attach the assembly to a frame of the seat bottom or the seat back, wherein the fastener is installed into one or more of the massage subassembly, the fluid actuator subassembly, and the ventilation subassembly, wherein the fastener permits movement of one or more of the substrate, the massage subassembly, the fluid actuator subassembly, and the ventilation subassembly relative to the fastener, wherein one or more of the substrate, the massage subassembly, the fluid actuator subassembly, and the ventilation subassembly include a plurality of alignment apertures, wherein the plurality of alignment apertures includes a notch formed into an outer periphery thereof.

In some embodiments, the fluid actuator subassembly (e.g., fluid actuator subassembly 50, 58) comprises a fan assembly (e.g., fan subassembly 50).

In some embodiments, the massage subassembly (e.g., massage subassembly 46) further comprises one or more massage bladders (e.g., massage bladders 48).

In some embodiments, the ventilation subassembly (e.g., ventilation subassembly 60) is formed into the substrate (e.g., substrate 42).

In some embodiments, one or more of the substrate (e.g., substrate 42), the massage subassembly (e.g., massage subassembly 46), the fluid actuator subassembly (e.g., fluid actuator subassembly 50, 58), and the ventilation subassembly (e.g., ventilation subassembly 60) are fastened together by a weld (e.g., fastener 36, 62).

In some embodiments, a fastener (e.g., fastener 36, 62) attaches the assembly (e.g., vehicle seat assembly 10, trim cover subassembly 15, cushion subassembly 20, fluid actuator subassembly 25, 30, seat module subassembly 38, seat module subassembly 76) to a frame (e.g. frame subassembly 35) of the seat bottom (e.g. seat bottom 44) or the seat back (e.g. seatback 40).

In some embodiments, a cushion (e.g., cushion subassembly 20) is assembled to the substrate (e.g., substrate 42), wherein a plurality of recesses is formed into the cushion (e.g., cushion subassembly 20), each of the recesses is sized to receive a bladder (e.g., massage bladders 48) of the massage subassembly (e.g., massage subassembly 46).

In some embodiments, the fluid actuator subassembly (e.g., fluid actuator subassembly 50, 58) comprises a valve subassembly (e.g., fluid actuator subassembly 58).

In some embodiments, the fluid actuator subassembly (e.g., fluid actuator subassembly 50, 58) further comprises a pump (e.g., fluid actuator subassembly 58) in fluid communication with the valve subassembly (e.g., fluid actuator subassembly 58).

In some embodiments, a trim cover (e.g., trim cover assembly 15) is attached to the substrate (e.g., substrate 42).

In some embodiments, an elastic strap (e.g., fastener 36, 62) is attached to an internal surface of the trim cover (e.g., trim cover subassembly 15) in cooperation with one or more of the substrate (e.g., substrate 42), the massage subassembly (e.g., massage subassembly 46), the fluid actuator subassembly (e.g., fluid actuator subassembly 50, 58), and the ventilation subassembly (e.g., ventilation subassembly 60) for alignment. A fastener (e.g., fastener 36, 62) is attached to a distal end of the elastic strap (e.g., fastener 36, 62) to attach the assembly (e.g., vehicle seat assembly 10, trim cover subassembly 15, cushion subassembly 20, fluid actuator subassembly 25, 30, seat module subassembly 38, seat module subassembly 76) to a seat frame (e.g., seat frame assembly 35).

In some embodiments, a cushion (e.g., cushion subassembly 20) is provided, wherein the elastic strap is a pull-through line that extends through an aperture in the cushion (e.g., cushion subassembly 20) to align the cushion (e.g., cushion subassembly 20) with the assembly (e.g., vehicle seat assembly 10, trim cover subassembly 15, cushion subassembly 20, fluid actuator subassembly 25, 30, seat module subassembly 38, seat module subassembly 76). For example, tensioning of the pull-through line brings the seat components or subassembly into alignment with the seat cushioning material. In a further example, the pull-through line includes a toggle closure to fasten the subassembly.

In some embodiments, a cover (e.g., trim cover subassembly 15) is attached to the substrate (e.g., substrate 42) to provide a chamber to at least partially enclose the massage subassembly (e.g., massage subassembly 46), the fluid actuator subassembly (e.g., fluid actuator subassembly 50, 58), or the ventilation subassembly (e.g., ventilation subassembly 60), between the cover (e.g., trim cover subassembly 15) and the substate (e.g., substrate 42).

In some embodiments, a lumbar subassembly (e.g., massage subassembly 46) is disposed within the chamber.

In some embodiments, the massage subassembly (e.g., massage subassembly 46) is disposed within the chamber.

In some embodiments, the ventilation subassembly (e.g., ventilation subassembly 60) is disposed within the chamber.

In some embodiments, a heat transfer subassembly (e.g., heat transfer subassembly 68) is disposed within the chamber.

In some embodiments, a sensor (e.g., sensor 70) is disposed within the chamber.

In some embodiments, wiring (e.g., wiring 72) is disposed within the chamber.

In some embodiments, the cover (e.g., trim cover subassembly 15) and the substrate (e.g., substrate 42) are formed integrally.

In some embodiments, the cover (e.g., trim cover subassembly 15) and the substrate (e.g., substrate 42) comprise thermoplastic polyurethane.

In some embodiments, the massage subassembly (e.g., massage subassembly 46) is disposed between the cover (e.g., cover subassembly 15) and the substrate (e.g., substrate 42).

In some embodiments, the massage subassembly (e.g., massage subassembly 46) is disposed external of the cover (e.g., cover subassembly 15) and the substrate (e.g., substrate 42).

In some embodiments, a collapsible sidewall (e.g., sidewall 74) interconnects the cover (e.g., cover subassembly 15) and the substrate (e.g., substrate 42).

In some embodiments, the sidewall (e.g., sidewall 74) includes a corrugated bellows.

In some embodiments, a cushion (e.g., cushion subassembly 20) is disposed within the chamber.

In some embodiments, the cushion (e.g., cushion subassembly 20) comprises a fluid permeable spacer fabric.

In some embodiments, the substrate (e.g., substrate 42) comprises a fluid impermeable layer, which may be a thermoplastic polyurethane. The cover (e.g., trim cover subassembly 15) comprises a fluid impermeable layer, which may be a thermoplastic polyurethane. The cover (e.g., trim cover subassembly 15) is attached to the substrate (e.g., substrate 42) along a periphery of the substrate (e.g., substrate 42) for a fluid tight chamber between the cover (e.g., cover subassembly 15) and the substrate (e.g., substrate 42).

In some embodiments, the cover (e.g., cover subassembly 15) is sewn to the substrate (e.g., substrate 42).

In some embodiments, a fastener (e.g., fastener 36, 62) interconnects the cover (e.g., trim cover subassembly 15) and the substrate (e.g., substrate 42).

In some embodiments, the fastener (e.g., fastener 36, 62) comprises a rivet (e.g., rivet 62), which may be a tag pin, barbed fastener, or a ribbed shank rivet.

In some embodiments, a fastener (e.g., fastener 36, 62) is installed into the substrate (e.g., substrate 42).

In some embodiments, the fastener (e.g., fastener 36, 62) attaches the massage subassembly and/or the fluid actuator subassembly to the substrate.

In some embodiments, the fastener (e.g., fastener 36, 62) is installed into one or more of the massage subassembly (e.g., massage subassembly 48), the fluid actuator subassembly (e.g., fluid actuator subassembly 50, 58), and the ventilation subassembly (e.g., ventilation subassembly 60).

In some embodiments, the fastener (e.g., fastener 36, 62) permits movement of one or more of the substrate (e.g., substrate 42), the massage subassembly (e.g., massage subassembly 46), the fluid actuator subassembly (e.g., fluid actuator subassembly 50, 58), and the ventilation subassembly (e.g., ventilation subassembly 60) relative to the fastener (e.g., fastener 36, 62).

In some embodiments, one or more of the substrate (e.g., substrate 42), the massage subassembly (e.g., massage subassembly 46), the fluid actuator subassembly (e.g., fluid actuator subassembly 50, 58), and the ventilation subassembly (e.g., ventilation subassembly 60) include a plurality of alignment apertures (e.g., apertures 64).

In some embodiments, the plurality of alignment apertures (e.g., apertures 64) includes a notch formed into an outer periphery thereof.

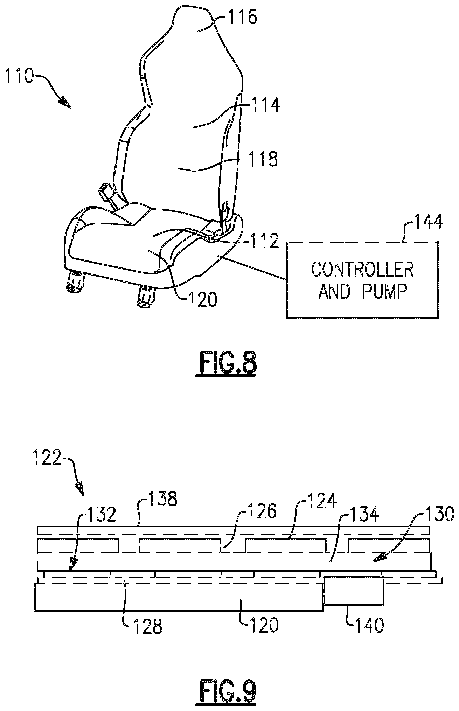

Figure 8 illustrates a vehicle seat assembly 110 according to some embodiments. The vehicle seat assembly 110 is provided with a seat bottom 112 adapted to be mounted to a vehicle floor. The vehicle seat assembly 110 may be provided in any row of a vehicle. The vehicle seat assembly 110 includes a seat back 114 extending upright from the seat bottom 112. The vehicle seat assembly 110 also includes a head restraint 116 extending above the seat back 114. The vehicle seat assembly 110 may be employed in any type of vehicle, including land vehicles, watercrafts, aircrafts, or the like. The vehicle seat assembly 110 may be any seat assembly such as an office chair, furniture, or the like.

The vehicle seat assembly 110 is provided with a trim cover 118 over the seat bottom 112, seat back 114, and head restraint 116 to conceal a frame, cushioning, and functional components. The seat bottom 112 is provided with a seat cushioning material 120. The seat cushioning material 120 may be composed of a stranded mesh as discussed above or a foam. The vehicle seat assembly 110 is also provided with a controller and pump 144. The controller and pump 144 may be provided in a module under the seat cushioning material 120, and may be a multifunction controller that also controls other functions in the vehicle.

Figure 9 illustrates a seat subassembly 122 according to some embodiments. The seat subassembly 122 is provided with a first fluid impermeable layer 124 and a second fluid impermeable layer 128 sized to be placed over the seat cushioning material 120. The first fluid impermeable layer 124 may be composed of a cushioning material, such as a foam. The second fluid impermeable layer 128 may be formed from an impermeable polymeric material, such as thermoplastic polyurethane (TPU) film, polyvinyl chloride (PVC) film, polyethylene, or the like. The first fluid impermeable layer 124 is provided with a plurality of vents 126 formed therethrough, according to some embodiments. Although a plurality of vents 126 is illustrated and described, any quantity of vents 126 may be utilized. The vents 126 direct airflow through the seat subassembly 122. According to some embodiments, the first fluid impermeable layer 124 and vents 126 may be optional if the trim cover 118 has a plurality of holes formed therethrough. Additionally, the first fluid impermeable layer 124 may be insulative. The first fluid impermeable layer 124 and the second fluid impermeable layer 128 may be bonded together with a seam that is sewn, adhered, welded, or the like, around peripheral edges of the layers 124, 128.

The second fluid impermeable layer 128 is provided in cooperation with the first fluid impermeable layer 124 to provide a fluid chamber 130 therebetween. The seat subassembly 122 is further provided with an inflatable bladder assembly 132. The inflatable bladder assembly 132 is supported upon the first fluid impermeable layer 124 and disposed within the fluid chamber 130, according to some embodiments. According to some embodiments, the inflatable bladder assembly 132 may be displaced outside of the fluid chamber 130, such as between the second fluid impermeable layer 128 and the seat cushioning material 120.

The controller 144 is in electrical communication with the pump 144, which is in turn, in fluid communication with the inflatable bladder assembly 132 to inflate the assembly 132. The controller 144 is programmed to receive input indicative of a manual adjustment and adjust the inflatable bladder assembly 132 to impart a pressure upon an occupant. Likewise, the controller 144 may also be programmed to receive input indicative of a massage program to operate the inflatable bladder assembly 132 to impart a pressurized massage effect upon the occupant.

The seat subassembly 122 is further provided with a fluid permeable layer 134. The fluid permeable layer 134 is formed from a resilient and porous material, such as porous foam or an extruded thermoplastic resin mesh described earlier above. The fluid permeable layer 134 is sized to be received within the fluid chamber 130, on the inflatable bladder assembly 132. The fluid permeable layer 134 and the inflatable bladder assembly 132 are disposed between the first fluid impermeable layer 124 and the second fluid impermeable layer 128. While a plurality of inflatable air bladder assemblies 132 are shown, any quantity of air bladder assemblies 132 may be employed.

The fluid permeable layer 134 ensures that the first fluid impermeable layer 124 and second fluid impermeable layer 128 are not compressed together by the weight of an occupant. Without the permeable layer 134, the impermeable layers 124, 128 could be compressed when weight from an occupant is applied which may cut off airflow when using a fan 140. When the seat subassembly 122 utilizes a compressor as opposed to the fan 140, the permeable layer 134 may be omitted.

The seat subassembly 122 is also provided with a heat transfer layer 138 displaced along the first fluid impermeable layer 124, and spaced apart from the second fluid impermeable layer 128. In some embodiments, the heat transfer layer 138 may be disposed along the trim layer 118 or alternatively disposed between the second fluid impermeable layer 128 and the fan 140. In some embodiments, the heat transfer layer 138 may be disposed between the first fluid impermeable layer 124 and the first fluid permeable layer 134. The heat transfer layer 138 is provided with an electrically conductive heater mat.

According to some embodiments, the seat subassembly 122 is provided as a preassembled module that is subsequently assembled to the seat cushioning material 120, and/or the seat trim cover 118. According to some embodiments, the seat subassembly 122 is further provided with the external trim layer 118 disposed over the first fluid impermeable layer 124 and the second fluid impermeable layer 128. The trim layer 118 is perforated to permit the fluid to pass through the external trim layer 118. According to some embodiments, the trim layer 118 is glued to the first fluid impermeable layer 124.

With continued reference to Figure 9, the seat subassembly 122 is provided with a fluid actuator 140, such as the fan 140. The fluid actuator 140 is welded directly to the second fluid impermeable layer 128 to seal a connection around the fan 140. The fan 140 is connected to the second fluid impermeable layer 128 with a retention ring according to some embodiments. The fan 140 is installed between the trim cover 118 and the seat cushioning material 120. The seat cushioning material 120 includes a receptacle cavity that is sized to receive the fan 140. For example, the fan 140 has a fan profile and the cavity has a cavity geometry that is analogous to the fan profile, in order to provide a snug fit of the fan 140. Traditional fans are installed beneath a vehicle seat cushion and outside of a trim cover assembly. Installing the fan 140 above the seat cushioning material 120 allows the fan 140 to be disposed within the seat subassembly 122.

Prior art seat assemblies with heating and cooling features, often place the fan and the massage bladder assemblies beneath the cushion. Fluid ducting is then assembled through the cushion and the trim cover of the conventional seat assemblies. The fluid impermeable layers 124, 128, the permeable layer 134, the heat transfer layer 138, the air bladder assemblies 132, and the fluid actuator 140 are all preassembled within the seat subassembly 122 so that the seat subassembly 122 can be installed as a whole onto a seat frame. This preassembly facilitates reduction in manufacturing cost and time in comparison to the prior art.

The seat subassembly 122 is operable with an air permeable nonfoam seat cushioning material 120 formed from strand mesh, such as described earlier above. The second fluid impermeable layer 128 provides a barrier between the fluid chamber 130 and the seat cushioning material 120. When utilized with a foam cushion 120, the second fluid impermeable layer 128 can be omitted if the cushion 120 is air impermeable. In this case, the fluid actuator 140 may be welded directly to the first fluid impermeable layer 124 to convey a fluid through the vent 126 of the fluid impermeable layer 124. Alternatively, the fluid actuator 140 may be separate from the trim cover.

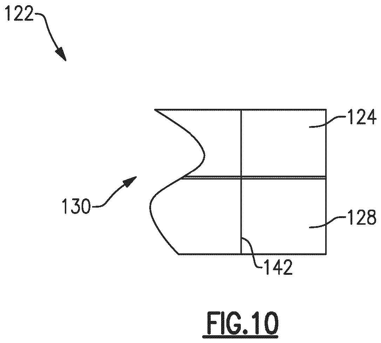

Figure 10 illustrates the first fluid impermeable layer 124, and the second fluid impermeable layer 128 with stitching 142 along the perimeter. The stitching 142 seals the layers 124, 128 so that air does not escape the fluid chamber 130. Alternatively, the layers 124, 128 may be attached with an adhesive or welded together.

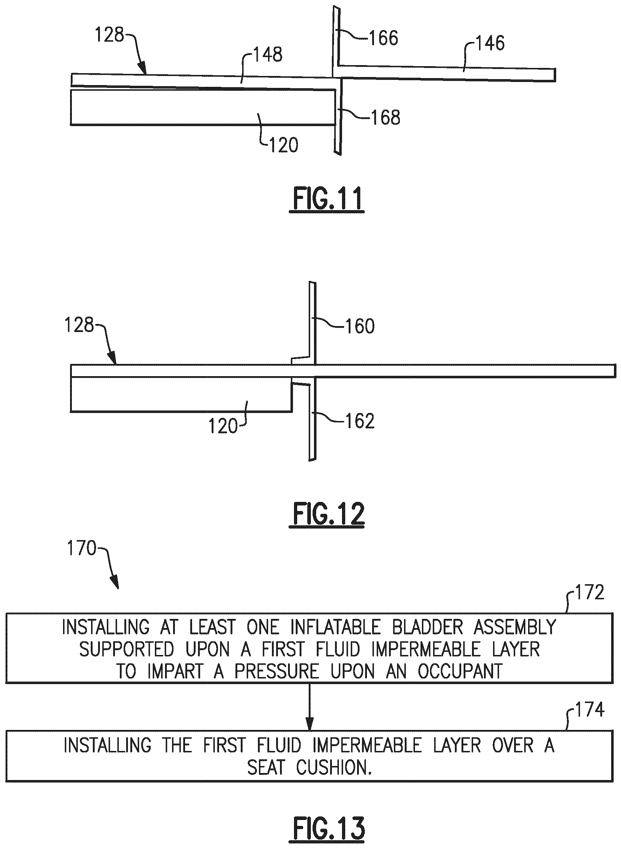

Figure 11 illustrates the second fluid impermeable layer 128 according to some embodiments. The second fluid impermeable layer 128 is provided with a first portion 146 and a second portion 148. The first portion 146 is further provided with a first flap 166. In some embodiments, the first flap 166 is perforated to allow air flow between zones or seams within the subassembly 122. In some embodiments, the first flap 166 may be segmented to allow air flow between zones and/or within the fluid chamber 130. The second portion 148 is further provided with a second flap 168 extending in a direction opposite of the first flap 166. The flaps 166, 168 may be employed for attaching the subassembly 122 to other seating components or subassemblies. For example, in some embodiments, the second flap 168 may be connected to the seat cushioning material 120. The first portion 146 and the second portion 148 may be sewn, welded, adhered, or otherwise fastened together. The first portion 146 and the second portion 148 may be ultrasonic welded or high frequency friction welded together.

Figure 12 illustrates the second fluid impermeable layer 128 as a continuous sheet according to some embodiments. The second fluid impermeable layer 128 is provided with a first flap 160 and a second flap 162. The first flap 160 may be perforated to allow air to pass therethrough within the fluid chamber 130. The second flap 162 extends in a direction opposite of the first flap 160 and may be attached to the seat cushioning material 120. The first and second flaps 160, 162 may be sewn, welded, adhered, or otherwise fastened to the second fluid impermeable layer 128. The first and second flaps 160, 162 may be ultrasonic welded or high frequency friction welded to the second fluid impermeable layer 128.

Figure 13 illustrates a method 170 in accordance with some embodiments. The method 170 is provided, and may be used to install the at least one inflatable bladder assembly 132, and to install the first fluid impermeable layer 124. The method 170 may have greater or fewer steps than described below, and various steps may be performed in another order, sequentially, or simultaneously.

Method 170 comprises: installing (172) at least one inflatable bladder assembly (e.g., an inflatable bladder assembly 132) supported on a first fluid impermeable layer (e.g., first fluid impermeable layer 124, second fluid impermeable layer 128, first portion 146) to impart a pressure upon an occupant; and installing (174) the first fluid impermeable layer (e.g., first fluid impermeable layer 124, second fluid impermeable layer 128, first portion 146) over a seat cushioning material.

The vehicle seat assembly may be provided with a seat bottom adapted to be mounted to a vehicle floor. The vehicle seat assembly may be provided in any row of a vehicle. The vehicle seat assembly may include a seat back extending upright from the seat bottom. The vehicle seat assembly may also include a head restraint extending above the seat back. The vehicle seat assembly may be employed in any type of vehicle, including land vehicles, watercrafts, aircrafts, or the like. The vehicle seat assembly may be any seat assembly such as an office chair, furniture, or the like. The vehicle seat assembly may be provided with a trim cover over the seat bottom, seat back, and head restraint to conceal a frame, cushioning, and functional components.

The seat bottom may be provided with a seat cushioning material. The seat cushioning material may be composed of a stranded thermoplastic mesh discussed above or a foam. The vehicle seat assembly may also be provided with a controller and pump. The controller and pump may be provided in a module under the seat cushioning material, and may be a multifunction controller that also controls other functions in the vehicle.

The seat subassembly may be provided with a second fluid impermeable layer sized to be placed over the seat cushioning material. The first fluid impermeable layer may be composed of a cushioning material, such as a foam. The second fluid impermeable layer may be formed from an impermeable polymeric material, such as thermoplastic polyurethane (TPU) film, polyvinyl chloride (PVC) film, polyethylene, or the like. The first fluid impermeable layer may be provided with a plurality of vents formed therethrough. Any quantity of vents may be utilized. The vents may direct airflow through the seat subassembly. The first fluid impermeable layer and vents may be optional if the trim cover has a plurality of holes formed therethrough. The first fluid impermeable layer may be insulative. The first fluid impermeable layer and the second fluid impermeable layer may be bonded together with a seam that is sewn, adhered, welded, or the like, around peripheral edges of the layers.

The inflatable bladder assembly may be supported on the first fluid impermeable layer and may be disposed within the fluid chamber. The inflatable bladder assembly may be disposed outside of the fluid chamber, such as between the second fluid impermeable layer and the seat cushioning material.

The controller may be in electrical communication with the pump, which in turn, may be in fluid communication with the inflatable bladder assembly to inflate the assembly. The controller may be programmed to receive input indicative of a manual adjustment and adjust the inflatable bladder assembly to impart a pressure upon an occupant. The controller may also be programmed to receive input indicative of a massage program to operate the inflatable bladder assembly to impart a pressurized massage effect upon the occupant.

The seat subassembly may be further provided with a fluid permeable layer. The fluid permeable layer may be formed from a resilient and porous material, such as porous foam or an extruded thermoplastic resin mesh. The fluid permeable layer may be sized to be received within the fluid chamber, disposed on the inflatable bladder assembly. The fluid permeable layer and the inflatable bladder assembly may be disposed between the first fluid impermeable layer and the second fluid impermeable layer. Any quantity of air bladder assemblies may be employed.

The fluid permeable layer may ensure that the first fluid impermeable layer and the second fluid impermeable layer are not compressed together by the weight of an occupant. Without the permeable layer, the impermeable layers could be compressed when weight from an occupant is applied which may cut off airflow when using a fan. When the seat subassembly utilizes a compressor as opposed to the fan, the permeable layer may be omitted.

The seat subassembly may also be provided with a heat transfer layer disposed along the first fluid impermeable layer, and spaced apart from the second fluid impermeable layer. The heat transfer layer may be disposed along the trim layer or alternatively disposed between the second fluid impermeable layer and the fan. The heat transfer layer may be disposed between the first fluid impermeable layer and the first fluid permeable layer. The heat transfer layer may be provided with an electrically conductive heater mat.

The seat subassembly may be provided as a preassembled module that is stacked together and subsequently secured to the seat cushioning material, and/or the seat trim cover. For instance, secured means fixed against opening or separating. The seat subassembly may be further provided with the external trim layer disposed over the first fluid impermeable layer and the second fluid impermeable layer. The trim layer may be perforated to permit the fluid to pass through the external trim layer. The trim layer may be glued to the first fluid impermeable layer. The fluid actuator may be welded directly to the second fluid impermeable layer to seal a connection around the fan. The fan may be connected to the second fluid impermeable layer with a retention ring. The fan may be installed between the trim cover and the seat cushioning material. The seat cushioning material may include a receptacle sized to receive the fan. Installation of the fan above the seat cushioning material may allow the fan to be disposed within the seat subassembly.

The fluid impermeable layers, the permeable layer, the heat transfer layer, the air bladder assemblies, and the fluid actuator may all be preassembled within the seat subassembly so that the seat subassembly can be installed as a whole onto a seat frame. The seat subassembly may be operable with an air permeable nonfoam seat cushioning material formed from thermoplastic mesh. The second fluid impermeable layer may provide a barrier between the fluid chamber and the seat cushioning material. When utilized with a foam cushion, the second fluid impermeable layer may be omitted if the cushion is air impermeable. In this case, the fluid actuator may be welded directly to the first fluid impermeable layer to convey a fluid through the vent of the fluid impermeable layer. The fluid actuator may be separate from the trim cover.

The first fluid impermeable layer, and the second fluid impermeable layer may be provided with stitching along the perimeter. The stitching may seal the layers so that air does not escape the fluid chamber. The layers may be attached with an adhesive or welded together as opposed to utilizing the stitching.

The second fluid impermeable layer may be provided with a first portion and a second portion. The first portion may be further provided with a first flap. The first flap may be perforated to allow air flow between zones or seams within the subassembly. The first flap may be segmented to allow air flow between zones and/or within the fluid chamber. The second portion may be further provided with a second flap extending in a direction opposite of the first flap. The flaps may be employed for attaching the subassembly to other seating components or subassemblies. The second flap may be connected to the seat cushioning material. The first portion and the second portion may be sewn, welded, adhered, or otherwise fastened together. The first portion and the second portion may be ultrasonic welded or high frequency friction welded together.

The second fluid impermeable layer may be a continuous sheet. The second fluid impermeable layer may be provided with a first flap and a second flap. The first flap may be perforated to allow air to pass therethrough within the fluid chamber. The second flap may extend in a direction opposite of the first flap and may be attached to the seat cushioning material. The first and second flaps may be sewn, welded, adhered, or otherwise fastened to the second fluid impermeable layer. The first and second flaps may be ultrasonic welded or high frequency friction welded to the second fluid impermeable layer.

In some embodiments, the method 170 includes attaching, such as by welding, a second portion (e.g., second portion 148, first flap 160, second flap 162) to the first fluid impermeable layer (e.g., first fluid impermeable layer 124, second fluid impermeable layer 128, first portion 146) as a retainer (e.g., first flap 160, second flap 162, first flap 166, second flap 168). The second fluid impermeable layer may be provided with a first portion and a second portion. The first portion may be further provided with a first flap. The first flap may be perforated to allow air flow between zones or seams within the subassembly. The first flap may be segmented to allow air flow between zones and/or within the fluid chamber. The second portion may be further provided with a second flap extending in a direction opposite of the first flap. The flaps may be employed for attaching the subassembly to other seating components or subassemblies. The second flap may be connected to the seat cushioning material. The first portion and the second portion may be sewn, welded, adhered, or otherwise fastened together. The first portion and the second portion may be ultrasonic welded or high frequency friction welded together.

The second fluid impermeable layer may be a continuous sheet. The second fluid impermeable layer may be provided with a first flap and a second flap. The first flap may be perforated to allow air to pass therethrough within the fluid chamber. The second flap may extend in a direction opposite of the first flap and may be attached to the seat cushioning material. The first and second flaps may be sewn, welded, adhered, or otherwise fastened to the second fluid impermeable layer. The first and second flaps may be ultrasonic welded or high frequency friction welded to the second fluid impermeable layer.

In some embodiments, the method 170 includes welding the second portion (e.g., second portion 148, first flap 160, second flap 162) to the first fluid impermeable layer (e.g., first fluid impermeable layer 124). The first portion may be further provided with a first flap. The first flap may be perforated to allow air flow between zones or seams within the subassembly. The first flap may be segmented to allow air flow between zones and/or within the fluid chamber. The second portion may be further provided with a second flap extending in a direction opposite of the first flap. The flaps may be employed for attaching the subassembly to other seating components or subassemblies. The second flap may be connected to the seat cushioning material. The first portion and the second portion may be sewn, welded, adhered, or otherwise fastened together. The first portion and the second portion may be ultrasonic welded or high frequency friction welded together.

The second fluid impermeable layer may be a continuous sheet. The second fluid impermeable layer may be provided with a first flap and a second flap. The first flap may be perforated to allow air to pass therethrough within the fluid chamber. The second flap may extend in a direction opposite of the first flap and may be attached to the seat cushioning material. The first and second flaps may be sewn, welded, adhered, or otherwise fastened to the second fluid impermeable layer. The first and second flaps may be ultrasonic welded or high frequency friction welded to the second fluid impermeable layer.

In some embodiments, the method 170 includes attaching another seat component (e.g., trim layer 118, heat transfer layer 138, fan 140) to the second portion (e.g., second portion 148, first flap 160, second flap 162). The seat subassembly may also be provided with a heat transfer layer disposed along the first fluid impermeable layer, and spaced apart from the second fluid impermeable layer. The heat transfer layer may be disposed along the trim layer or alternatively disposed between the second fluid impermeable layer and the fan. The heat transfer layer may be disposed between the first fluid impermeable layer and the first fluid permeable layer. The heat transfer layer may be provided with an electrically conductive heater mat.

The seat subassembly may be provided as a preassembled module that is subsequently assembled to the seat cushioning material, and/or the seat trim cover. The seat subassembly may be further provided with the external trim layer disposed over the first fluid impermeable layer and the second fluid impermeable layer. The trim layer may be perforated to permit the fluid to pass through the external trim layer. The trim layer may be glued to the first fluid impermeable layer. The fluid actuator may be welded directly to the second fluid impermeable layer to seal a connection around the fan. The fan may be connected to the second fluid impermeable layer with a retention ring. The fan may be installed between the trim cover and the seat cushioning material. The seat cushioning material may include a receptacle sized to receive the fan. Installation of the fan above the seat cushioning material may allow the fan to be displaced within the seat subassembly.

The fluid impermeable layers, the permeable layer, the heat transfer layer, the air bladder assemblies, and the fluid actuator may all be preassembled within the seat subassembly so that the seat subassembly can be installed as a whole onto a seat frame. The seat subassembly may be operable with an air permeable nonfoam seat cushioning material formed from thermoplastic mesh. The second fluid impermeable layer may provide a barrier between the fluid chamber and the seat cushioning material. When utilized with a foam cushion, the second fluid impermeable layer may be omitted if the cushion is air impermeable. In this case, the fluid actuator may be welded directly to the first fluid impermeable layer to convey a fluid through the vent of the fluid impermeable layer. The fluid actuator may be separate from the trim cover.

The first fluid impermeable layer, and the second fluid impermeable layer may be provided with stitching along the perimeter. The stitching may seal the layers so that air does not escape the fluid chamber. The layers may be attached with an adhesive or welded together as opposed to utilizing the stitching.

The second fluid impermeable layer may be provided with a first portion and a second portion. The first portion may be further provided with a first flap. The first flap may be perforated to allow air flow between zones or seams within the subassembly. The first flap may be segmented to allow air flow between zones and/or within the fluid chamber. The second portion may be further provided with a second flap extending in a direction opposite of the first flap. The flaps may be employed for attaching the subassembly to other seating components or subassemblies. The second flap may be connected to the seat cushioning material. The first portion and the second portion may be sewn, welded, adhered, or otherwise fastened together. The first portion and the second portion may be ultrasonic welded or high frequency friction welded together.

The second fluid impermeable layer may be a continuous sheet. The second fluid impermeable layer may be provided with a first flap and a second flap. The first flap may be perforated to allow air to pass therethrough within the fluid chamber. The second flap may extend in a direction opposite of the first flap and may be attached to the seat cushioning material. The first and second flaps may be sewn, welded, adhered, or otherwise fastened to the second fluid impermeable layer. The first and second flaps may be ultrasonic welded or high frequency friction welded to the second fluid impermeable layer.

An assembly (e.g., vehicle seat assembly 110, seat subassembly 122) is described which may be a seat assembly or a subassembly thereof. The assembly (e.g., vehicle seat assembly 110, seat subassembly 122) comprises a first fluid impermeable layer (e.g., first fluid impermeable layer 124) sized to be placed over a seat cushioning material; and at least one inflatable bladder assembly (e.g., an inflatable bladder assembly 132) supported upon the first fluid impermeable layer (e.g., first fluid impermeable layer 124) to impart a pressure upon an occupant. The vehicle seat assembly may be provided with a seat bottom adapted to be mounted to a vehicle floor. The vehicle seat assembly may be provided in any row of a vehicle. The vehicle seat assembly may include a seat back extending upright from the seat bottom. The vehicle seat assembly may also include a head restraint extending above the seat back. The vehicle seat assembly may be employed in any type of vehicle, including land vehicles, watercrafts, aircrafts, or the like. The vehicle seat assembly may be any seat assembly such as an office chair, furniture, or the like.

The vehicle seat assembly may be provided with a trim cover over the seat bottom, seat back, and head restraint to conceal a frame, cushioning, and functional components. The seat bottom may be provided with a seat cushioning material. The seat cushioning material may be composed of a stranded thermoplastic mesh as discussed above or a foam. The vehicle seat assembly may also be provided with a controller and pump. The controller and pump may be provided in a module under the seat cushioning material, and may be a multifunction controller that also controls other functions in the vehicle.

The seat subassembly may be provided with a second fluid impermeable layer sized to be placed over the seat cushioning material. The first fluid impermeable layer may be composed of a cushioning material, such as a foam. The second fluid impermeable layer may be formed from an impermeable polymeric material, such as thermoplastic polyurethane (TPU) film, polyvinyl chloride (PVC) film, polyethylene, or the like. The first fluid impermeable layer may be provided with a plurality of vents formed therethrough. Any quantity of vents may be utilized. The vents may direct airflow through the seat subassembly. The first fluid impermeable layer and vents may be optional if the trim cover has a plurality of holes formed therethrough. The first fluid impermeable layer may be insulative.

The first fluid impermeable layer and the second fluid impermeable layer may be bonded together with a seam that is sewn, adhered, welded, or the like, around peripheral edges of the layers. The second fluid impermeable layer may be provided in cooperation with the first fluid impermeable layer to provide a fluid chamber therebetween. The inflatable bladder assembly may be supported on the first fluid impermeable layer and may be disposed within the fluid chamber. The inflatable bladder assembly may be disposed outside of the fluid chamber, such as between the second fluid impermeable layer and the seat cushioning material.

The controller may be in electrical communication with the pump, which in turn, may be in fluid communication with the inflatable bladder assembly to inflate the assembly. The controller may be programmed to receive input indicative of a manual adjustment and adjust the inflatable bladder assembly to impart a pressure upon an occupant. The controller may also be programmed to receive input indicative of a massage program to operate the inflatable bladder assembly to impart a pressurized massage effect upon the occupant.

The seat subassembly may be further provided with a fluid permeable layer. The fluid permeable layer may be formed from a resilient and porous material, such as porous foam or an extruded thermoplastic resin mesh. The fluid permeable layer may be sized to be received within the fluid chamber, disposed on the inflatable bladder assembly. The fluid permeable layer and the inflatable bladder assembly may be disposed between the first fluid impermeable layer and the second fluid impermeable layer. Any quantity of air bladder assemblies may be employed. The fluid permeable layer may ensure that the first fluid impermeable layer and the second fluid impermeable layer are not compressed together by the weight of an occupant. Without the permeable layer, the impermeable layers could be compressed when weight from an occupant is applied which may cut off airflow when using a fan. When the seat subassembly utilizes a compressor as opposed to the fan, the permeable layer may be omitted.

The seat subassembly may also be provided with a heat transfer layer disposed along the first fluid impermeable layer, and spaced apart from the second fluid impermeable layer. The heat transfer layer may be disposed along the trim layer or alternatively disposed between the second fluid impermeable layer and the fan. The heat transfer layer may be disposed between the first fluid impermeable layer and the first fluid permeable layer. The heat transfer layer may be provided with an electrically conductive heater mat.

The seat subassembly may be provided as a preassembled module that is subsequently assembled to the seat cushioning material, and/or the seat trim cover. The seat subassembly may be further provided with the external trim layer disposed over the first fluid impermeable layer and the second fluid impermeable layer. The trim layer may be perforated to permit the fluid to pass through the external trim layer. The trim layer may be glued to the first fluid impermeable layer.

The seat subassembly may be provided with a fluid actuator, such as a fan. The fluid actuator may be welded directly to the second fluid impermeable layer to seal a connection around the fan. The fan may be connected to the second fluid impermeable layer with a retention ring. The fan may be installed between the trim cover and the seat cushioning material. The seat cushioning material may include a receptacle sized to receive the fan. Installation of the fan above the seat cushioning material may allow the fan to be displaced within the seat subassembly.

The fluid impermeable layers, the permeable layer, the heat transfer layer, the air bladder assemblies, and the fluid actuator may all be preassembled within the seat subassembly so that the seat subassembly can be installed as a whole onto a seat frame. The seat subassembly may be operable with an air permeable nonfoam seat cushioning material formed from thermoplastic mesh. The second fluid impermeable layer may provide a barrier between the fluid chamber and the seat cushioning material. When utilized with a foam cushion, the second fluid impermeable layer may be omitted if the cushion is air impermeable. In this case, the fluid actuator may be welded directly to the first fluid impermeable layer to convey a fluid through the vent of the fluid impermeable layer. The fluid actuator may be separate from the trim cover.

The first fluid impermeable layer, and the second fluid impermeable layer may be provided with stitching along the perimeter. The stitching may seal the layers so that air does not escape the fluid chamber. The layers may be attached with an adhesive or welded together as opposed to utilizing the stitching.

The second fluid impermeable layer may be provided with a first portion and a second portion. The first portion may be further provided with a first flap. The first flap may be perforated to allow air flow between zones or seams within the subassembly. The first flap may be segmented to allow air flow between zones and/or within the fluid chamber. The second portion may be further provided with a second flap extending in a direction opposite of the first flap. The flaps may be employed for attaching the subassembly to other seating components or subassemblies. The second flap may be connected to the seat cushioning material. The first portion and the second portion may be sewn, welded, adhered, or otherwise fastened together. The first portion and the second portion may be ultrasonic welded or high frequency friction welded together.

The second fluid impermeable layer may be a continuous sheet. The second fluid impermeable layer may be provided with a first flap and a second flap. The first flap may be perforated to allow air to pass therethrough within the fluid chamber. The second flap may extend in a direction opposite of the first flap and may be attached to the seat cushioning material. The first and second flaps may be sewn, welded, adhered, or otherwise fastened to the second fluid impermeable layer. The first and second flaps may be ultrasonic welded or high frequency friction welded to the second fluid impermeable layer.

In some embodiments, at least one vent (e.g., vent 126) is formed through the first fluid impermeable layer (e.g., first fluid impermeable layer 124, second fluid impermeable layer 128, first portion 146). Any quantity of vents may be utilized. The vents may direct airflow through the seat subassembly. The first fluid impermeable layer and vents may be optional if the trim cover has a plurality of holes formed therethrough.

In some embodiments, a second fluid impermeable layer (e.g., second fluid impermeable layer 128) is provided in cooperation with the first fluid impermeable layer (e.g., first fluid impermeable layer 124, second fluid impermeable layer 128, first portion 146) to provide a fluid chamber (e.g., fluid chamber 130) therebetween. The second fluid impermeable layer may be sized to be placed over the seat cushioning material. The second fluid impermeable layer may be formed from an impermeable polymeric material, such as thermoplastic polyurethane (TPU) film, polyvinyl chloride (PVC) film, polyethylene, or the like. The first fluid impermeable layer and the second fluid impermeable layer may be bonded together with a seam that is sewn, adhered, welded, or the like, around peripheral edges of the layers. The fluid impermeable layers, the permeable layer, the heat transfer layer, the air bladder assemblies, and the fluid actuator may all be preassembled within the seat subassembly so that the seat subassembly can be installed as a whole onto a seat frame. The seat subassembly may be operable with an air permeable nonfoam seat cushion formed from stranded thermoplastic mesh as discussed above. The second fluid impermeable layer may provide a barrier between the fluid chamber and the seat cushioning material. When utilized with a foam cushion, the second fluid impermeable layer may be omitted if the cushion is air impermeable. In this case, the fluid actuator may be welded directly to the first fluid impermeable layer to convey a fluid through the vent of the fluid impermeable layer. The fluid actuator may be separate from the trim cover. The first fluid impermeable layer, and the second fluid impermeable layer may be provided with stitching along the perimeter. The stitching may seal the layers so that air does not escape the fluid chamber. The layers may be attached with an adhesive or welded together as opposed to utilizing the stitching.

In some embodiments, a second fluid actuator (e.g., fan 140) is attached directly to the second fluid impermeable layer (e.g., first fluid impermeable layer 124, second fluid impermeable layer 128, first portion 146). The fluid permeable layer may ensure that the first fluid impermeable layer and the second fluid impermeable layer are not compressed together by the weight of an occupant. Without the permeable layer, the impermeable layers could be compressed when weight from an occupant is applied which may cut off airflow when using a fan. When the seat subassembly utilizes a compressor as opposed to the fan, the permeable layer may be omitted. The fluid actuator may be welded directly to the second fluid impermeable layer to seal a connection around the fan. The fan may be connected to the second fluid impermeable layer with a retention ring. The fan may be installed between the trim cover and the seat cushioning material. The seat cushioning material may include a receptacle sized to receive the fan. Installation of the fan above the seat cushioning material may allow the fan to be displaced within the seat subassembly. The seat subassembly may be operable with an air permeable nonfoam seat cushioning material formed from stranded thermoplastic mesh. The second fluid impermeable layer may provide a barrier between the fluid chamber and the seat cushioning material. When utilized with a foam cushion, the second fluid impermeable layer may be omitted if the cushion is air impermeable. In this case, the fluid actuator may be welded directly to the first fluid impermeable layer to convey a fluid through the vent of the fluid impermeable layer. The fluid actuator may be separate from the trim cover.

In some embodiments, the second fluid actuator (e.g., fan 140) is welded to the second fluid impermeable layer (e.g., first fluid impermeable layer 124, second fluid impermeable layer 128, first portion 146). The fluid permeable layer may ensure that the first fluid impermeable layer and the second fluid impermeable layer are not compressed together by the weight of an occupant. Without the permeable layer, the impermeable layers could be compressed when weight from an occupant is applied which may cut off airflow when using a fan. When the seat subassembly utilizes a compressor as opposed to the fan, the permeable layer may be omitted. The fan may be connected to the second fluid impermeable layer with a retention ring. The fan may be installed between the trim cover and the seat cushioning material. The seat cushioning material may include a receptacle sized to receive the fan. Installation of the fan above the seat cushioning material may allow the fan to be displaced within the seat subassembly. The seat subassembly may be operable with an air permeable nonfoam seat cushioning material formed from stranded thermoplastic mesh. The second fluid impermeable layer may provide a barrier between the fluid chamber and the seat cushioning material. When utilized with a foam cushion, the second fluid impermeable layer may be omitted if the cushion is air impermeable. In this case, the fluid actuator may be welded directly to the first fluid impermeable layer to convey a fluid through the vent of the fluid impermeable layer. The fluid actuator may be separate from the trim cover.

In some embodiments, the second fluid actuator further comprises a fan (e.g., fan 140). The fluid permeable layer may ensure that the first fluid impermeable layer and the second fluid impermeable layer are not compressed together by the weight of an occupant. Without the permeable layer, the impermeable layers could be compressed when weight from an occupant is applied which may cut off airflow when using a fan. When the seat subassembly utilizes a compressor as opposed to the fan, the permeable layer may be omitted. The fluid actuator may be welded directly to the second fluid impermeable layer to seal a connection around the fan. The fan may be connected to the second fluid impermeable layer with a retention ring. The fan may be installed between the trim cover and the seat cushioning material. The seat cushioning material may include a receptacle sized to receive the fan. Installation of the fan above the seat cushioning material may allow the fan to be displaced within the seat subassembly. The seat subassembly may be operable with an air permeable nonfoam seat cushioning material formed from stranded thermoplastic mesh. The second fluid impermeable layer may provide a barrier between the fluid chamber and the seat cushioning material. When utilized with a foam cushion, the second fluid impermeable layer may be omitted if the cushion is air impermeable. In this case, the fluid actuator may be welded directly to the first fluid impermeable layer to convey a fluid through the vent of the fluid impermeable layer. The fluid actuator may be separate from the trim cover.

In some embodiments, the at least one inflatable bladder assembly (e.g., an inflatable bladder assembly 132) is disposed within the fluid chamber (e.g., fluid chamber 130). The inflatable bladder assembly may be supported on the first fluid impermeable layer and may be disposed within the fluid chamber. The inflatable bladder assembly may be disposed outside of the fluid chamber, such as between the second fluid impermeable layer and the seat cushioning material. The fluid permeable layer may be formed from a resilient and porous material, such as porous foam or an extruded thermoplastic resin mesh. The fluid permeable layer may be sized to be received within the fluid chamber, disposed on the inflatable bladder assembly. The fluid permeable layer and the inflatable bladder assembly may be disposed between the first fluid impermeable layer and the second fluid impermeable layer. Any quantity of air bladder assemblies may be employed. The fluid impermeable layers, the permeable layer, the heat transfer layer, the air bladder assemblies, and the fluid actuator may all be preassembled within the seat subassembly so that the seat subassembly can be installed as a whole onto a seat frame.

In some embodiments, a first fluid permeable layer (e.g., first fluid permeable layer 134) is sized to be received within the fluid chamber (e.g., fluid chamber 130), wherein the first fluid permeable layer (e.g., first fluid permeable layer 134) is displaced upon the inflatable bladder assembly (e.g., an inflatable bladder assembly 132). The inflatable bladder assembly may be disposed on the first fluid impermeable layer and may be disposed within the fluid chamber. The inflatable bladder assembly may be disposed outside of the fluid chamber, such as between the second fluid impermeable layer and the seat cushioning material.

The fluid permeable layer may be formed from a resilient and porous material, such as porous foam or an extruded thermoplastic resin mesh. The fluid permeable layer may be sized to be received within the fluid chamber, displaced upon the inflatable bladder assembly. The fluid permeable layer and the inflatable bladder assembly may be disposed between the first fluid impermeable layer and the second fluid impermeable layer. Any quantity of air bladder assemblies may be employed. The fluid permeable layer may ensure that the first fluid impermeable layer and the second fluid impermeable layer are not compressed together by the weight of an occupant. Without the permeable layer, the impermeable layers could be compressed when weight from an occupant is applied which may cut off airflow when using a fan. When the seat subassembly utilizes a compressor as opposed to the fan, the permeable layer may be omitted.

The fluid impermeable layers, the permeable layer, the heat transfer layer, the air bladder assemblies, and the fluid actuator may all be preassembled within the seat subassembly so that the seat subassembly can be installed as a whole onto a seat frame. The seat subassembly may be operable with an air permeable nonfoam seat cushioning material formed from stranded thermoplastic mesh. The second fluid impermeable layer may provide a barrier between the fluid chamber and the seat cushioning material. When utilized with a foam cushion, the second fluid impermeable layer may be omitted if the cushion is air impermeable. In this case, the fluid actuator may be welded directly to the first fluid impermeable layer to convey a fluid through the vent of the fluid impermeable layer. The fluid actuator may be separate from the trim cover.

In some embodiments, a heat transfer layer (e.g., heat transfer layer 138) is disposed along the first fluid impermeable layer (e.g., first fluid impermeable layer 124, second fluid impermeable layer 128, first portion 146) spaced apart from the second fluid impermeable layer (e.g., second fluid impermeable layer 128). The seat subassembly may also be provided with a heat transfer layer disposed along the first fluid impermeable layer, and spaced apart from the second fluid impermeable layer. The heat transfer layer may be disposed along the trim layer or alternatively disposed between the second fluid impermeable layer and the fan. The heat transfer layer may be disposed between the first fluid impermeable layer and the first fluid permeable layer. The heat transfer layer may be provided with an electrically conductive heater mat. The fluid impermeable layers, the permeable layer, the heat transfer layer, the air bladder assemblies, and the fluid actuator may all be preassembled within the seat subassembly so that the seat subassembly can be installed as a whole onto a seat frame.

In some embodiments, the heat transfer layer (e.g., heat transfer layer 138) further comprises an electrically conductive heater mat.

In some embodiments, a controller (e.g., controller and pump 144) is in electrical communication with the at least one inflatable bladder assembly (e.g., an inflatable bladder assembly 132), and programmed to: receive input indicative of a manual adjustment; and adjust the at least one inflatable bladder assembly (e.g., an inflatable bladder assembly 132), e.g., by inflating or deflating, to impart the pressure upon the occupant. The controller and pump may be provided in a module under the seat cushioning material, and may be a multifunction controller that also controls other functions in the vehicle. The inflatable bladder assembly may be supported upon the first fluid impermeable layer and may be disposed within the fluid chamber. The inflatable bladder assembly may be disposed outside of the fluid chamber, such as between the second fluid impermeable layer and the seat cushioning material. The controller may be in electrical communication with the pump, which in turn, may be in fluid communication with the inflatable bladder assembly to inflate the assembly. The controller may be programmed to receive input indicative of a manual adjustment and adjust the inflatable bladder assembly to impart a pressure upon an occupant. The controller may also be programmed to receive input indicative of a massage program to operate the inflatable bladder assembly to impart a pressurized massage effect upon the occupant. The fluid permeable layer may be formed from a resilient and porous material, such as porous foam or an extruded thermoplastic resin mesh. The fluid permeable layer may be sized to be received within the fluid chamber, displaced upon the inflatable bladder assembly. The fluid permeable layer and the inflatable bladder assembly may be disposed between the first fluid impermeable layer and the second fluid impermeable layer. Any quantity of air bladder assemblies may be employed.

In some embodiments, the first fluid impermeable layer (e.g., first fluid impermeable layer 124, second fluid impermeable layer 128, first portion 146) is insulative.

In some embodiments, a plurality of vents (e.g., vents 126) is formed through the first fluid impermeable layer (e.g., first fluid impermeable layer 124, second fluid impermeable layer 128, first portion 146). Any quantity of vents may be utilized. The vents may direct airflow through the seat subassembly. The first fluid impermeable layer and vents may be optional if the trim cover has a plurality of holes formed therethrough.

In some embodiments, the at least one inflatable bladder assembly (e.g., an inflatable bladder assembly 132) further comprises a plurality of inflatable bladder assemblies (e.g., an inflatable bladder assembly 132) disposed within the fluid chamber (e.g., fluid chamber 130). The inflatable bladder assembly may be disposed on the first fluid impermeable layer and may be disposed within the fluid chamber. The inflatable bladder assembly may be disposed outside of the fluid chamber, such as between the second fluid impermeable layer and the seat cushioning material.

The controller may be in electrical communication with the pump, which in turn, may be in fluid communication with the inflatable bladder assembly to inflate the assembly. The controller may be programmed to receive input indicative of a manual adjustment and adjust the inflatable bladder assembly to impart a pressure upon an occupant. The controller may also be programmed to receive input indicative of a massage program to operate the inflatable bladder assembly to impart a pressurized massage effect upon the occupant. The fluid permeable layer may be formed from a resilient and porous material, such as porous foam or an extruded thermoplastic resin mesh. The fluid permeable layer may be sized to be received within the fluid chamber, displaced upon the inflatable bladder assembly. The fluid permeable layer and the inflatable bladder assembly may be oriented between the first fluid impermeable layer and the second fluid impermeable layer. Any quantity of air bladder assemblies may be employed.

In some embodiments, a seam (e.g., stitching 142) extends through the first fluid impermeable layer (e.g., first fluid impermeable layer 124, second fluid impermeable layer 128, first portion 146). The first fluid impermeable layer, and the second fluid impermeable layer may be provided with stitching along the perimeter. The stitching may seal the layers so that air does not escape the fluid chamber. The layers may be attached with an adhesive or welded together as opposed to utilizing the stitching.

In some embodiments, the first fluid impermeable layer (e.g., first fluid impermeable layer 124, second fluid impermeable layer 128, first portion 146) further comprises a first portion (e.g., first portion 146, first flap 160) and a second portion (e.g., second portion 148, first flap 160, second flap 162) extending away from the first portion (e.g., first portion 146, first flap 160) to provide a retainer (e.g., first flap 160, second flap 162, first flap 166, second flap 168). The second fluid impermeable layer may be provided with a first portion and a second portion. The first portion may be further provided with a first flap. The first flap may be perforated to allow air flow between zones or seams within the subassembly. The first flap may be segmented to allow air flow between zones and/or within the fluid chamber. The second portion may be further provided with a second flap extending in a direction opposite of the first flap. The flaps may be employed for attaching the subassembly to other seating components or subassemblies. The second flap may be connected to the seat cushioning material. The first portion and the second portion may be sewn, welded, adhered, or otherwise fastened together. The first portion and the second portion may be ultrasonic welded or high frequency friction welded together.

The second fluid impermeable layer may be a continuous sheet. The second fluid impermeable layer may be provided with a first flap and a second flap. The first flap may be perforated to allow air to pass therethrough within the fluid chamber. The second flap may extend in a direction opposite of the first flap and may be attached to the seat cushioning material. The first and second flaps may be sewn, welded, adhered, or otherwise fastened to the second fluid impermeable layer. The first and second flaps may be ultrasonic welded or high frequency friction welded to the second fluid impermeable layer.

A seat assembly (e.g., vehicle seat assembly 110) is described, comprising a seat bottom (e.g., seat bottom 112). A seat back (e.g., seat back 114) extends in an upright position from the seat bottom (e.g., seat bottom 112). A seat cushioning material is attached to the seat bottom (e.g., seat bottom 112) or the seat back (e.g., seat back 114). The assembly (e.g., seat subassembly 122) is installed over the seat cushioning material. The seat bottom may be provided with a seat cushioning material. The seat cushioning material may be composed of a stranded thermoplastic mesh as discussed above or a foam.

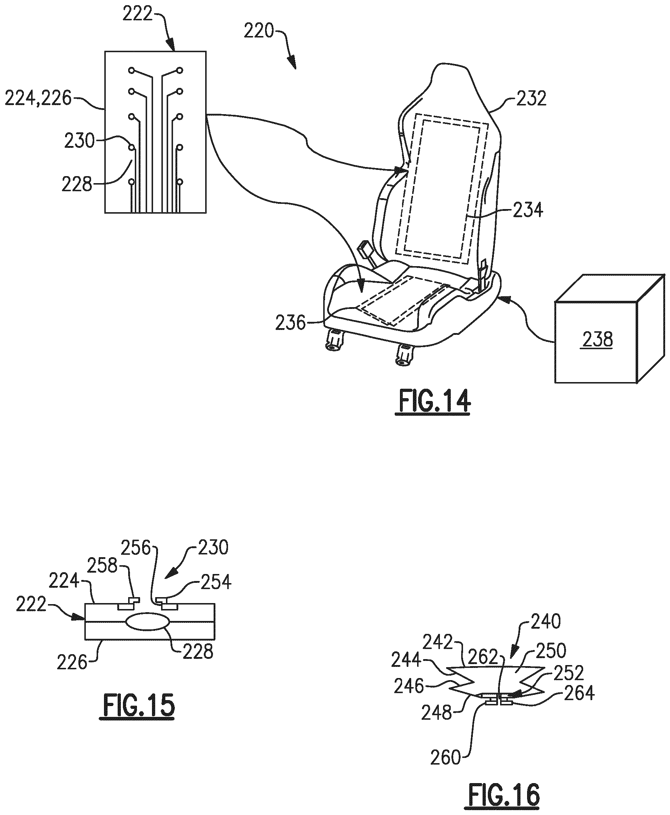

Figure 14 shows a seat assembly 220 according to some embodiments. In some embodiments, the seat assembly 220 is a vehicle seat assembly 220, as depicted. Although the seat assembly 220 is illustrated and described, any seat assembly 220 may be employed. For example, the assembly 220 may also be utilized in an office chair, comfort chair, furniture, mattress or other cushion. The assembly 220 may be utilized in a vehicle seat, aircraft seat, watercraft seat, or the like. The assembly 220 may also be utilized in a bed mattress, camping mattress, hospital bed, or the like.

The assembly 220 includes a fluid assembly 222 with at least two sheets 224, 226 of air impermeable material. The first and second sheets 224, 226 of air impermeable material are overlapped and connected to form a fluid cavity 228 therebetween. The first and second sheets 224, 226 of air impermeable material may be connected via welding, adhesive bonding, solvent bonding, mechanical fastening, or the like. The sheets 224, 226 may be formed from a polymeric material, including but not limited to, plastics such as thermoplastic polyurethane (TPU).

With further reference to Figure 14, a first fitting 230 is connected to the first sheet 224 or the second sheet 226 within a perimeter of the first sheet 224 or the second sheet 226. The fitting 230 is in fluid communication with the fluid cavity 228 and provides a fluid connection to the fluid cavity 228. The fitting 230 may be formed from a polymeric material, including but not limited to, plastics such as thermoplastic polyurethane (TPU). The fitting 230 may also be formed from an elastomeric material. The fitting 230 may be annular for radial symmetry about a center axis through the fitting 230.

The assembly 220 may be employed as a seat assembly, including a seat frame 232 having a seat back 234 and a seat bottom 236. The fluid assembly 222 may be installed in the seat back 234 and/or in the seat bottom 236.

The assembly 220 may further include a pump 238 connected to the assembly 220. The pump 238 may operate to inflate and deflate one or more fluid bladders during operation. The pump 238 may further include a valve assembly, and a controller, wherein the controller is programmed to actuate the pump 238 and the valve assembly to inflate and deflate the fluid assembly 220.

In additional embodiments, the fluid assembly 222 may include a plurality of fluid cavities 228 formed between the overlapping first and second sheets 224, 226 of air impermeable material. Each fluid cavity 228 has a fitting 230 in fluid communication with the fluid cavity 228. Figure 15 illustrates the fluid cavity 228 in fluid communication with the fitting 230.

Figure 16 illustrates a fluid bladder 240. The fluid bladder 240 is formed from a plurality of sheets, such as a first sheet 242, a second sheet 244, a third sheet 246, and a fourth sheet 248, of air impermeable material. The first sheet 242, second sheet 244, third sheet 246, and fourth sheet 248, may be made of a polymeric material, including but not limited to, plastics such as thermoplastic polyurethane. The first sheet 242, second sheet 244, third sheet 246, and fourth sheet 248, may be sequentially connected about adjoining perimeters to provide the fluid bladder 240. The first sheet 242, second sheet 244, third sheet 246, and fourth sheet 248 of air impermeable material may be connected about the perimeter via welding, adhesive bonding, solvent bonding, mechanical fastening, or the like. The sheets 242, 244, 246, 248 of the bladder 240 collectively provide a bellows style bladder 240. Ingress of fluid into the fluid cavity 250 expands the bladder 240, whereby conversely, egress of fluid from the fluid cavity 250 collapses the bladder 240. The fluid bladder 240 is arranged in the seat assembly 220 with the first sheet 242 facing an occupant contact or seating surface. The inflation of the bladder 240 imparts a pressurized massage effect upon the occupant.

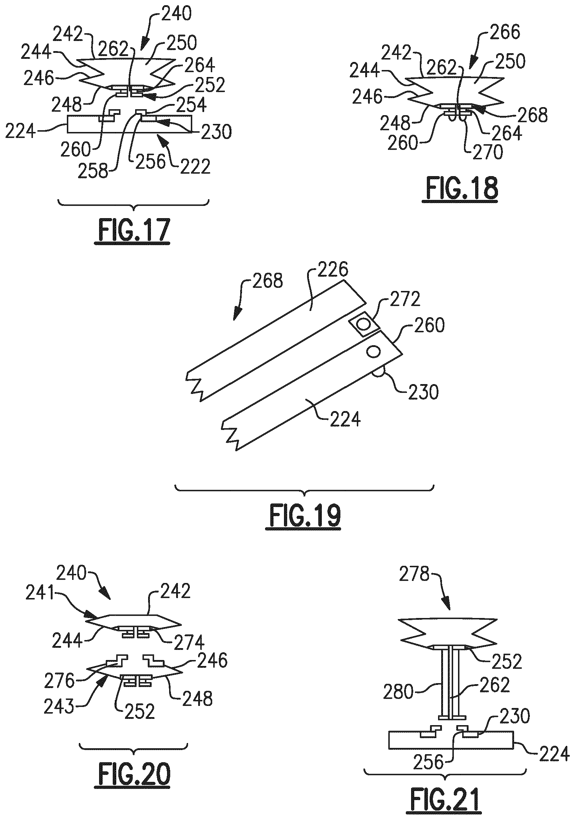

Referring now to Figures 16 and 17, the fluid bladder 240 may further include a second fitting 252 in fluid communication with the bladder cavity 250. The second fitting 252 is sized to couple to the first fitting 230 of the fluid assembly 222 for fluid communication between the first and second fittings 230, 252. The first and second fittings 230, 252 may be joined by a snap fit, such as an interference fit. The second fitting 252 may also be a snap ring 252 sized to be received within the first fitting 230. The second fitting 252 may be formed of a polymeric material, including but not limited to, plastics such as thermoplastic polyurethane (TPU). The first and second fittings 230, 252 form a fluid-tight seal to convey fluid from the fluid chamber 228 of the fluid assembly 222 to the fluid chamber 250 of the fluid bladder 240.

As illustrated in Figures 15 and 17, one of the fittings 230, 252, such as the first fitting 230 includes a cylindrical body 254 for passing fluid through a port 256 in the body 254. A radial retainer 258 extends inward from the body 254 to provide a fastener for the fitting 230. The first fitting 230 may be bonded to the first sheet 224 by welding, adhesives, or the like.

Referring again to Figures 16 and 17, the other of the fittings 230, 252, such as the second fitting 252 includes a cylindrical body 260 sized to be received in the port 256 of the first fitting 230. The cylindrical body 260 also includes a central port 262 in fluid communication with the port 256 in the first fitting 230. A recess 264 is formed in the body 260, which is sized to receive the retainer 258 of the first fitting 230. During assembly of the second fitting 252 to the first fitting 230, the body 260 of the second fitting 252 is inserted into the port 256 of the first fitting 230. The body 260 deforms the retainer 258, which resiliently flexes, thereby permitting the body 260 of the second fitting 252 to pass until the retainer 258 aligns with the recess 264, whereby the retainer 258 springs back, into the recess 264. The retainer 258 cooperates with the recess 264 to fasten the second fitting 252 to the first fitting 230 while maintaining a fluid seal between the fittings 230, 252. The second fitting 252 may be bonded to the fluid bladder 240 by welding, such as friction or sonic welding, adhesives, or the like. Although the first fitting 230 is depicted on the fluid assembly 222, and the second fitting 252 is illustrated and described on the fluid bladder 240, the fittings 230, 252 may be alternated.

Figure 18 illustrates a fluid bladder 266 with a fitting 268 according to some embodiments. The fluid bladder 266 may be similar to the fluid bladder 240 of the prior embodiments. The fitting 268 may be similar to the second fitting 252 of the prior embodiments. The fitting 268 may connect the fluid bladder 266 to the first fitting 230 of the fluid assembly 222 via a snap fit to provide a fluid-tight seal. Additionally, projections 270 may be formed on the body 260 of the fitting 268. Upon compression and deflation of the fluid bladder 266, the projections 270 may contact the second sheet 226 of the fluid assembly 222 to prevent the second sheet 226 from closing off the port 262 of the fitting 268, when a pressure is applied from a weight of an occupant.

Figure 19 illustrates an exploded view of the fitting 268 of Figure 18. The fitting 268 may include a radial retainer 272 as a separate component, aligned with the first fitting 230. The first fitting 230 may be installed through the first sheet 224. Subsequently, the retainer ring 272 is installed on the first fitting 230 to retain the first fitting 230 to the first sheet 224. Utilization of the retainer ring 272 may remove a step of an additional weld. The retainer rings 272 may be employed as an alternative to welding.

Figure 20 illustrates a fluid bladder assembly 240 according to other embodiments. The fluid bladder assembly includes interconnectable fluid bladders 241, 243. The fluid bladder 241 includes the first sheet 242 and the second sheet 244 of air impermeable material, which may be sequentially connected about adjoining perimeters. The first sheet 242 and second sheet 244 may be connected about the perimeter via welding, adhesive bonding, solvent bonding, mechanical fastening, or the like. The fluid bladder 243 includes the third sheet 246 and the fourth sheet 248 of air impenetrable material may be sequentially connected about adjoining perimeters via welding, adhesive bonding, solvent bonding, mechanical fastening, or the like. The second sheet 244 may include a third fitting 274. The third fitting 274 may connect the first and second sheets to a fourth fitting 276 on the third sheet 246 via a snap fit or interference fit. The snap fit may provide a fluid-tight seal between the second and third sheets.

Although the third fitting 274 is depicted on the second sheet 244 and the fourth fitting 276 is depicted on the third sheet 246, the fittings 274, 276 may be alternated. Under some embodiments, the fluid bladder 241 provides an intermediate fluid bladder 241 with the pair of sheets 246, 248 as one bellows. The fluid bladder 243 provides a terminal fluid bladder 243 with the other pair of sheets 242, 244 as another bellows. The quantity of bellows may be increased by adding more than one intermediate fluid bladder 241 between the terminal fluid bladder 243 and the first fitting 230. Under this process, various fluid bladder assemblies 240 may be assembled, depending on the applicable bladder displacement.

Figure 21 illustrates a fluid bladder 278 according to other embodiments. The fluid bladder 278 may be similar to the fluid bladder 240 of prior embodiments. The second fitting 252 of the fluid bladder 278 may include an extended tube 280. The extended tube 280 allows the second fitting 252 of the fluid bladder 278 to be routed through a material, including but not limited to, foam and connected to the first fitting 230 of the assembly on the other side. The foam may comprise a seat cushioning material or mattress. The extended tube 280 may be formed from the same material as that of the second fitting 252. The central port 262 extends axially through the extended tube 280 for fluid communication with the port 256 of the first fitting 230.

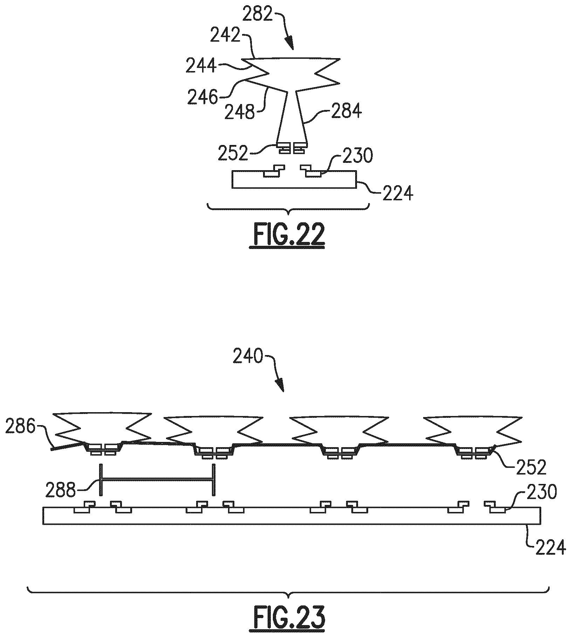

Figure 22 illustrates a fluid bladder 282 according to some embodiments. The fluid bladder 282 may include a fifth sheet 284 of air impenetrable material. The fifth sheet 284 may be formed from the same material as the first, second, third, and fourth sheets 242, 244, 246, 248. The fifth sheet 284 may be connected to the fourth sheet 248 about adjoining perimeters via welding, adhesive bonding, solvent bonding, mechanical fastening, or the like. The fifth sheet 284 may be in physical contact with the second fitting 252. The fifth sheet 284 may permit the second fitting 252 of the fluid bladder 282 to be routed through a material, such as a cushion.

Figure 23 illustrates a method for connecting a plurality of fluid bladders 240 to an assembly 220 in a single step. A plurality of fluid bladders 240 may be produced and physically linked together by a gang strip 286 for installation alignment of the fluid bladders 240. The gang strip 286 may be in physical contact with each of the plurality of fluid bladders 240. The fluid bladders 240 may be connected to each other at a specific distance 288 that corresponds to the distance between first fittings 230 on an assembly 220. The fluid bladders 240 may be arranged in a particular pattern that corresponds to a pattern in which the first fittings 230 are arranged on an assembly 220. Although the fluid bladders 240 are depicted in a linear pattern, other patterns including but not limited to linear or radial arrays, or a zig zag pattern are contemplated as well. The second fittings 252 of each of the fluid bladders 240 may then be connected to each of the first fittings 230 of the assembly 220 in one step. The strip of material 286 may be formed from a polymeric material, including but not limited to, plastics.

The air bladder assemblies 220 of the various embodiments provide flexibility and modularity in the design and assembly of air bladder assembly 220 for a particular application. The fittings 230, 252 permit flexibility for installation without requiring a weld at every seam, which may be difficult to automate for larger air bladder assemblies. The fittings 230, 252 also reduce the manufacturing time required to set up, weld, and cool the various sheets.

In other embodiments, a method is provided. The method comprises stacking a first sheet and a second sheet of an air impermeable material and bonding the first sheet to the second sheet to form a fluid cavity therebetween. Next, the method comprises forming an aperture through one of the first sheet and the second sheet into the fluid cavity. Last, the method comprises installing a fitting to the aperture in fluid communication with the fluid cavity.

In some embodiments the method may be used to manufacture a fluid bladder. At least two sheets may be connected about adjoining perimeters. The sheets may be connected about adjoining perimeters via welding, adhesive bonding, solvent bonding, mechanical fastening, or the like. The sheets may collectively provide an internal fluid cavity within a bellows style bladder. An aperture may then be formed through one of the sheets into the fluid cavity. A fitting may be installed to the aperture in fluid communication with the fluid cavity. The fitting may be formed to be installed into a corresponding fitting on an assembly. For example, the fitting may correspond to a fitting on a fluid assembly.

In other embodiments, the method may be used to manufacture a fluid assembly. At least two sheets of air impenetrable material may be bonded together to provide at least one fluid line through the sheets. The sheets may be bonded via welding, adhesive bonding, solvent bonding, mechanical fastening, or the like. The sheets may alternatively be bonded together to provide a plurality of fluid lines through the sheets. The plurality of fluid lines may be arranged in parallel. An aperture through one of the sheets may be installed at one end of each fluid line. A fitting in fluid communication with the fluid line may be installed into each aperture. The fitting may be formed to correspond to another fitting, including a fitting on a fluid bladder for example.

In other embodiments an assembly may be manufactured using the method. For example, the method may be used to manufacture a massage assembly. A fluid assembly with a plurality of fluid lines may be manufactured according to the method. The fluid lines may be arranged in parallel although other patterns are contemplated as well. Fittings may be installed in the apertures in each fluid line. A plurality of fluid bladders with fittings corresponding to the fittings on the fluid assembly may be manufactured. The fluid bladders may be manufactured as single bladders or as a unit comprising a plurality of bladders. If a unit, the bladders may be arranged in a pattern that permits the fittings on the fluid bladders to line up with corresponding fittings on the fluid assembly. The fluid bladders may then be fitted to the fittings on the fluid assembly. The fluid bladders may either be fitted to the fittings on the fluid assembly individually or as a unit. A pump, a valve assembly, and a controller may be connected to the assembly. The controller may be programmed to actuate the pump and the valve assembly to inflate and deflate the fluid bladders. The fluid bladders may be repeatedly inflated and deflated for the purposes of massage.

While various embodiments are described above, it is not intended that these embodiments describe all possible forms according to the disclosure. In that regard, the words used in the specification are words of description rather than limitation, and it is understood that various changes may be made without departing from the spirit and scope of the disclosure. Additionally, the features of various implementing embodiments may be combined to form further embodiments according to the disclosure.

## Claims

1. A seat system comprising:
a plurality of seat components including at least a fan, inflatable bladders, a heat mat, a foam layer, and an air distribution layer;
a seat cushioning material;
a trim cover disposed on the seat cushioning material, the seat components disposed between the seat cushioning material and the trim cover and secured together with at least one fastener.

2. The seat system as recited in claim 1, further comprising a corrugated joint between the trim cover and the seat cushioning material.

3. The seat system as recited in any of the preceding claims, wherein the fan is embedded in the seat cushioning material.

4. The seat system as recited in any of the preceding claims, wherein the foam layer has one or more cavities (e.g., a bulk space recessed into the surface, not a void cell in the foam), and the inflatable bladders are disposed in the one or more cavities.

5. The seat system as recited in any of the preceding claims, wherein the at least one fastener is selected from the group consisting of a key and tab that interlock, a plurality of tag pins, a sewn seam, a snap lock, a push-fastener fir-tree, a cable tie, a metal ring, a push pin, a toggle closure, and combinations thereof.

6. The seat system as recited in any of the preceding claims, wherein the seat components together provide a seat component sub-assembly, and the at least one fastener secures the seat component sub-assembly and the trim cover together,
preferably wherein the seat sub-assembly is sealed to be airtight,
and/or wherein the seat component sub-assembly includes a pocket and the fan is disposed in the pocket.

7. The seat assembly as recited in any of the preceding claims, wherein the trim cover includes a pocket and at least one of the seat components is disposed in the pocket.

8. The seat assembly as recited in any of the preceding claims, wherein the seat cushioning material has a first side and a second side opposite the first side, the first side includes one or more cavities.

9. The seat assembly as recited in claim 8, wherein at least one of the seat components is nested with one or more of the cavities.

10. The seat assembly as recited in any of the preceding claims, wherein the seat cushioning material is multi-layered.

11. The seat assembly as recited in any of the preceding claims, wherein the seat cushioning material and/or the seat components include an alignment feature.

12. The seat assembly as recited in claim 11, wherein the alignment feature includes a pull-though line connected with the seat components and extending through the seat cushioning material whereupon tensioning of the pull-through line brings the seat components into alignment with the seat cushioning material,
preferably wherein the pull-through line is elastic and/or wherein the pull-through line includes a toggle closure.

13. The seat assembly as recited in claim 8 or 9, wherein the fan defines a fan profile and the one or more cavities has a cavity geometry that is analogous to the fan profile.

14. A method comprising:
stacking together least a fan, inflatable bladders, a heat mat, a foam layer, and an air distribution layer to form a seat component sub-assembly;
securing the seat component sub-assembly together with at least one fastener;
securing the seat component sub-assembly with a trim cover; and
securing the trim cover with the seat component sub-assembly to a seat cushioning material, the seat component sub-assembly disposed between the seat cushioning material and the trim cover.

15. The method as recited in claim 14, further comprising dimensionally inspecting the seat system using at least one of a camera or a laser.

16. The method as recited in claim 15, wherein the seat cushioning material has a first side and a second side opposite the first side, the first side including one or more cavities, and including bringing together the seat component sub-assembly and the seat cushioning material, wherein upon bringing the seat component sub-assembly and the seat cushioning material together includes one or more portions of the seat component sub-assembly nesting into the one or more cavities in the seat cushioning material.
